# EUROPEAN PATENT SPECIFICATION

(11) **EP 4 259 682 B1**
(45) Date of publication and mention of the grant of the patent: **21.01.2026**
(21) Application number: 21835547.7
(22) Date of filing: 08.12.2021
(51) Int. Cl.: C08G 18/61, C08G 18/16, C08G 18/18, C08G 18/22, C08G 18/28, C08G 18/38, C08G 18/42, C08G 18/48, C08G 18/76, C08J 9/00, C08J 9/08, C08J 9/12, C08J 9/14, C08L 75/06, C08L 75/08, C08G 77/46, C08G 101/00, C08K 5/053, C08K 5/06, C08K 5/32

(54) **ISOCYANATE-REACTIVE COMPONENT, COMPOSITION COMPRISING SAME, AND FOAM FORMED THEREWITH**
ISOCYANATREAKTIVE KOMPONENTE, ZUSAMMENSETZUNG DAMIT UND DARAUS GEFORMTER SCHAUMSTOFF
COMPOSANT RÉAGISSANT AVEC L'ISOCYANATE, COMPOSITION LE COMPRENANT, ET MOUSSE FORMÉE AVEC CELUI-CI

(30) Priority: 08.12.2020 US 202063122929 P; 08.12.2020 US 202063122932 P
(43) Date of publication of application: 18.10.2023
(73) Proprietor: Dow Silicones Corporation, Midland, MI 48686-0994 (US); Dow Global Technologies LLC, Midland, MI 48674 (US)
(72) Inventor: BALIJEPALLI, Sudhakar, Midland, Michigan 48686-0994 (US); BAI, Peter, Midland, Michigan 48674 (US); TOTH, Simon, Midland, Michigan 48686-0994 (US); LI, Yongfu, Midland, Michigan 48674 (US)
(74) Representative: Murgitroyd & Company
(86) International application number: PCT/US2021/062375
(87) International publication number: WO 2022/125642

(56) References cited:
- EP-B1- 0 275 563
- EP-B1- 3 219 738
- WO-A1-2020/106538
- US-A1- 2016 152 739
- US-A1- 2020 377 684

## Description

### TECHNICAL FIELD

The subject disclosure generally relates to a composition and, more specifically, to an isocyanate-reactive component, a composition comprising the same for preparing a foam, and a foam formed therewith.

### BACKGROUND

Foams are known in the art and utilized in various end use applications, including insulation. Foams can be formed from various chemical compositions, and may utilize physical and/or chemical blowing agents. For example, polyurethane (PUR) and polyisocyanurate (PIR) foams are generally formed by reacting an isocyanate and a polyol in the presence of a blowing agent. Performance properties of foams, including hardness, density, flexibility, etc., are a function of the composition utilized in their preparation. In many end use applications of foams, it is desirable to minimize thermal conductivity and without deleteriously impacting density. For example, thermal conductivity can be minimized by simply reducing density of a foam. However, the reduction in density can make the foam unsuitable for various end use applications.
US2020377684A1 discloses a process for producing PU foams by reacting at least one polyol component with at least one isocyanate component in the presence of one or more catalysts that catalyse the isocyanate-polyol and/or isocyanate-water reactions and/or isocyanate trimerization, and optionally one or more chemical or physical blowing agents, with use of SiOC-bonded polyether siloxanes having branching in the siloxane moiety, prepared from branched siloxanes bearing acetoxy groups, wherein a sufficient amount of the SiOC-bonded polyether siloxane having branching in the siloxane moiety is added that the proportion by mass of this polyether siloxane (e) based on the finished PU foam is from 0.0001% to 10% by weight.
WO2020106538A1 provides a method of manufacturing a polyurethane foam having a low thermal conductivity from a foam formulation comprising a polyol, an isocyanate, a polyurethane catalyst, a surfactant, water, and a siloxane rich composition.
US2016152739A1 s directed to a composition comprising a siloxane of the formula (I) having at least one polyether radical which is linked via a urethane bond to an organic radical, preferably to an organic radical which has one or more isocyanate groups and/or polyurethane bonds, and one or more compounds which have two or more isocyanate groups, characterized in that the composition comprises no polyols which contain no silicon, or reaction products thereof with isocyanates; to use of the composition for producing polyurethanes and polyurethane foams; and to polyurethanes and polyurethane foams produced accordingly; and to their use.
EP3219738A1 discloses the use of linked siloxane block polymers of the general average formula (I) MaM1bDcD1dTeQfGgals additive in the production of PUR foam using at least one polyol component and at least one isocyanate component, the total polyol component used having an average hydroxyl number, determined according to DIN 53240-1:2012 -07, from >56 to <450 mg KOH/g, preferably from 57 - 300 mg KOH/g, and the PUR foam is produced at an isocyanate index of 65 to 108 is described.
EP0275563A1 discloses a polysiloxane-polyoxyalkylene composition of the nominal formula: wherein R is an alkyl group having 1 to 3 carbon atoms and R, R', R" and R‴ are individually monovalent polyoxyalkylene polyethers attached to the silicon atom through a difunctional link; and the polyoxyalkylene of R' is a poly(oxypropylene-oxyethylene) ether which contains 20% to 60% oxyethylene by weight and has an average molecular weight of from about 3,000 to about 5,500; the polyoxyalkylene of R" is a poly(oxypropylene-oxyethylene) ether which contains 20% to 60% oxyethylene by weight and has an average molecular weight of from about 800 to about 2,900; and the polyoxyalkylene of R‴ is a polyoxypropylene polyether having an average molecular weight from about 130 to about 1200; R can be R', R", or R‴, a and e are individually 0 or 1; b, c, and d are numbers such that b+c+d=y, x and y are positive numbers such that the sum of x+y ranges from 25 to 400 and x is greater than y; wherein the ratio (b+c):d ranges from 0.8 to 1.9.

### BRIEF SUMMARY

An isocyanate-reactive composition for preparing a foam is disclosed. The isocyanate-reactive composition comprises (A) a polyol, (B) a polysiloxane, and (C) a polyether alcohol compound. The (B) polysiloxane has the following formula:

(R¹₃SiO_{1/2})ₐ(R²₂SiO_{2/2})_{b}(R'R²SiO_{2/2})_{b'}(R²SiO_{3/2})_{c}(R'SiO_{3/2})_{c'}(SiO_{4/2})_{d},

wherein subscripts a, b, b', c, c' and d are each mole fractions such that a+b+b'+c+c'+d=1, with the provisos that 0<a<1, 0≤b<0.2, 0≤b'≤0.1 0<c<0.2, 0≤c'≤0.1, 0.4<d<0.7 , 0≤b'+c'≤0.1, and the ratio of subscript a to subscript d is from 0.7 to 1.2 to (a:d); each R¹ is independently selected from hydrocarbyl groups having from 1 to 30 carbon atoms, -OH, and H; each R² is independently selected from R¹ and -OX, where each X is independently H, a hydrocarbyl group R having from 1 to 30 carbon atoms, or a polyether moiety having the general formula -Y-R³(-[Y]ⱼ-Z)ᵢ, wherein R³ is a substituted or unsubstituted hydrocarbon segment, each Y is an independently selected oxyalkylene segment of general formula (CₙH₂ₙO)ₘ, where subscript m is from 1 to 50 and subscript n is independently selected from 2 to 4 in each moiety indicated by subscript m, each Z is independently H or a resinous silicone moiety, subscript i is from 0 to 8, and subscript j is independently 0 or 1 in each moiety indicated by subscript i; and each R' comprises an independently selected amino group. The polyether alcohol compound (C) has the general formula HO-Y-R³(-[Y]ⱼ-H)ᵢ, wherein each Y, R³, subscript i, and subscript j are as defined above.

A composition for preparing a foam is also disclosed. The composition comprises the isocyanate-reactive composition, (D) a polyisocyanate, (E) a catalyst, and (F) a blowing agent. The composition forms a foam upon at least components (A) and (D) reacting in the presence of components (E) and (F).

The foam formed with the composition and its method of preparation are also disclosed.

### DETAILED DESCRIPTION OF THE INVENTION

An isocyanate-reactive composition for preparing a foam is disclosed. A composition that is curable and comprises the isocyanate-reactive composition is also disclosed. For purposes of clarity, the isocyanate-reactive composition may be referred to herein as the isocyanate-reactive component, as distinguished from the composition that is curable and which comprises the isocyanate-reactive component. A method of preparing a foam and the foam formed therewith are also disclosed.

The isocyanate-reactive component comprises (A) a polyol. The polyol (A) is not limited so long as the isocyanate-reactive component and the polyol (A) can form a foam, which is typically a function of the isocyanate index of the composition rather than a particular selection of the polyol (A).

In certain embodiments, the polyol (A) comprises a polyether polyol. Polyether polyols suitable for the isocyanate-reaction component include, but are not limited to, products obtained by the polymerization of a cyclic oxide, for example, ethylene oxide ("EO"), propylene oxide ("PO"), butylene oxide ("BO"), tetrahydrofuran, or epichlorohydrin, in the presence of polyfunctional initiators. Suitable initiators contain a plurality of active hydrogen atoms. Catalysis for this polymerization can be either anionic or cationic, with catalysts such as KOH, CsOH, boron trifluoride, or a double metal cyanide complex (DMC) catalyst such as zinc hexacyanocobaltate or a quaternary phosphazenium compound. The initiator may be selected from, for example, neopentylglycol; 1,2-propylene glycol; water; trimethylolpropane; pentaerythritol; sorbitol; sucrose; glycerol; aminoalcohols, such as ethanolamine, diethanolamine, and triethanolamine; alkanediols, such as 1,6-hexanediol, 1,4-butanediol, 1,3-butane diol, 2,3-butanediol, 1,3-propanediol, 1,2-propanediol, 1,5-pentanediol, 2-methylpropane-1,3-diol, 1,4-cyclohexane diol, 1,3-cyclohexanedimethanol, 1,4-cyclohexanedimethanol, 2,5- hexanediol; ethylene glycol; diethylene glycol, triethylene glycol; bis-3-aminopropyl methylamine; ethylene diamine; diethylene triamine; 9(1)-hydroxymethyloctadecanol, 1,4- bishydroxymethylcyclohexane; hydrogenated bisphenol; 9,9(10,10)-bishydroxymethyloctadecanol; 1,2,6-hexanetriol, and combination thereof. Other initiators include other linear and cyclic compounds containing an amine. Exemplary polyamine initiators include ethylene diamine, neopentyldiamine, 1,6-diaminohexane; bisaminomethyltricyclodecane; bisaminocyclohexane; diethylene triamine; bis-3-aminopropyl methylamine; triethylene tetramine; various isomers of toluene diamine; diphenylmethane diamine; N-methyl-1,2-ethanediamine, N-methyl-1,3-propanediamine; N,N-dimethyl-1,3-diaminopropane; N,N-dimethylethanolamine; 3,3'-diamino-N-methyldipropylamine; N,N-dimethyldipropylenetriamine; aminopropyl-imidazole; and combinations thereof. As understood in the art, the initiator compound, or combination thereof, is generally selected based on desired functionality of the resulting polyether polyol. For the purposes of this disclosure, the polyol (A) may be formed with any of the initiators mentioned above, or combinations of initiators. In addition, the polyol (A) may comprise any of these initiators, including glycerol.

Other suitable polyether polyols include polyether diols and triols, such as polyoxypropylene diols and triols and poly(oxyethylene-oxypropylene)diols and triols obtained by the simultaneous or sequential addition of ethylene and propylene oxides to di- or trifunctional initiators. Polyether polyols having higher functionalities than triols can also be utilize in lieu of or in addition to polyether diols and/or triols. Copolymers having oxyethylene contents of from 5 to 90% by weight, based on the weight of the polyol component, of which the polyols may be block copolymers, random/block copolymers or random copolymers, can also be used. Yet other suitable polyether polyols include polytetramethylene glycols obtained by the polymerization of tetrahydrofuran.

In these or other embodiments, the polyol (A) comprises a polyester polyol. Polyester polyols suitable for the isocyanate-reaction component include, but are not limited to, hydroxyl-functional reaction products of polyhydric alcohols, such as ethylene glycol, propylene glycol, diethylene glycol, 1,4-butanediol, neopentylglycol, 1,6-hexanediol, cyclohexane dimethanol, glycerol, trimethylolpropane, pentaerythritol, sucrose, or polyether polyols or mixtures of such polyhydric alcohols, and polycarboxylic acids, particularly dicarboxylic acids or their ester-forming derivatives, for example succinic, glutaric and adipic acids or their dimethyl esters, sebacic acid, phthalic anhydride, tetrachlorophthalic anhydride, dimethyl terephthalate or mixtures thereof. Polyester polyols obtained by the polymerization of lactones, e.g. caprolactone, in conjunction with a polyol, or of hydroxy carboxylic acids, e.g. hydroxy caproic acid, may also be used. In certain embodiments, the polyol (A) comprises a mixture of polyester and polyether polyols.

Suitable polyesteramide polyols may be obtained by the inclusion of aminoalcohols such as ethanolamine in polyesterification mixtures. Suitable polythioether polyols include products obtained by condensing thiodiglycol either alone or with other glycols, alkylene oxides, dicarboxylic acids, formaldehyde, aminoalcohols or aminocarboxylic acids. Suitable polycarbonate polyols include products obtained by reacting diols such as 1,3-propanediol, 1,4-butanediol, 1,6-hexanediol, diethylene glycol or tetraethylene glycol with diaryl carbonates, e.g. diphenyl carbonate, or with phosgene. Suitable polyacetal polyols include those prepared by reacting glycols such as diethylene glycol, triethylene glycol or hexanediol with formaldehyde. Other suitable polyacetal polyols may also be prepared by polymerizing cyclic acetals. Suitable polyolefin polyols include hydroxy-terminated butadiene homo- and copolymers.

In certain embodiments, the polyol (A) comprises a polymer polyol. In specific embodiments, the polymer polyol is a graft polyol. Graft polyols may also be referred to as graft dispersion polyols or graft polymer polyols. Graft polyols often include products, i.e., polymeric particles, obtained by the in-situ polymerization of one or more vinyl monomers, e.g. styrene monomers and/or acrylonitrile monomers, and a macromer in a polyol, e.g. a polyether polyol.

It is to be appreciated that the isocyanate-reactive component may include any combination of two or more polyols that are different from one another based on functionality, molecular weight, viscosity, or structure.

In various embodiments, the polyol (A) has a hydroxyl (OH) equivalent weight of from greater than 0 to 2,000, alternatively from greater than 0 to 1,700, alternatively from greater than 0 to 1,000, alternatively from greater than 0 to 700, alternatively from greater than 0 to 400, alternatively from greater than 0 to 350, alternatively from greater than 0 to 325, alternatively from greater than 0 to 300, alternatively from greater than 0 to 275, alternatively from greater than 0 to 250, alternatively from greater than 0 to 225, alternatively from greater than 0 to 200, g/mol. In certain embodiments, including the ranges above, the OH equivalent weight of the polyol (A) is at least 30 g/mol. Methods of determining OH equivalent weight are known in the art based on functionality and molecular weight of a given polyol.

In these or other embodiments, the polyol has a functionality of from 2 to 10, alternatively from 2 to 9, alternatively from 2 to 8, alternatively from 2 to 7, alternatively from 3 to 6.

In specific embodiments, the polyol (A) comprises, alternatively consists essentially of, alternatively consists of, one or more polyether polyols, optionally in combination with one or more polyester polyols.

It is to be appreciated that when the polyol (A) comprises a blend of two or more different polyols, the properties above may be based on the overall polyol (A), i.e., averaging the properties of the individual polyols in the polyol (A), or may relate to a specific polyol in the blend of polyols. Typically, the properties above relate to the overall polyol (A).

The isocyanate-reactive component further comprises (B) polysiloxane, (C) a polyether alcohol compound, and optionally an aminosilicon compound, which are described in turn below.

As understood by those of skill in the art, siloxanes may be characterized in terms of [M], [D], [T], and/or [Q] units/siloxy groups therein. More specifically, these [M], [D], [T], and [Q] siloxy groups each represent structural units of individual functionality present in polysiloxanes, such as organosiloxanes and organopolysiloxanes. In particular, [M] represents a monofunctional unit of general formula R"₃SiO_{1/2}; [D] represents a difunctional unit of general formula R"₂SiO_{2/2}; [T] represents a trifunctional unit of general formula R"SiO_{3/2}; and [Q] represents a tetrafunctional unit of general formula SiO_{4/2}, as shown by the general structural moieties below:

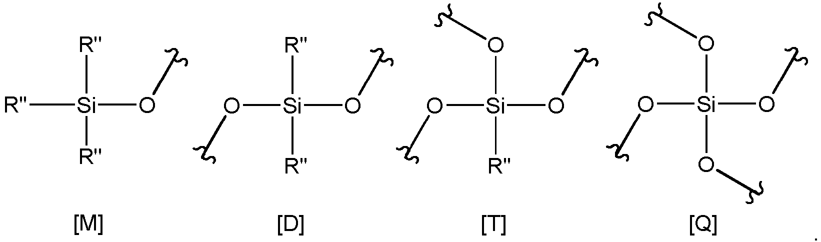

In these general structural moieties, each R" is independently a monovalent or polyvalent substituent. As understood in the art, specific substituents suitable for each R" are not particularly limited, and may be monoatomic or polyatomic, organic or inorganic, linear or branched, substituted or unsubstituted, aromatic, aliphatic, saturated or unsaturated, and combinations thereof. Typically, each R" is independently selected from hydrocarbyl groups, alkoxy and/or aryloxy groups, and siloxy groups, such as those represented by any one, or combination, of [M], [D], [T], and/or [Q] units described above.

As introduced above, the isocyanate-reactive component comprises the polysiloxane (B). As will be appreciated in view of the description herein, the polysiloxane (B) may be categorized or otherwise referred to as an MQ resin where, as introduced above, M designates monofunctional siloxy units (i.e., R"₃SiO_{1/2}, with R" representing a silicon-bonded substituent) and Q designates tetrafunctional siloxy units (i.e., SiO_{4/2}). Such MQ resins are known in the art as macromolecular polymers composed primarily of M and Q units and, optionally a limited number of D and/or T units (e.g. ≤ 20 mole %, total), and typically present in/as a solid (e.g. powder or flake) form unless disposed in a solvent. These MQ resins are often designated simply by the general formula [M]ₓ[Q] where subscript x refers to the molar ratio of M siloxy units to Q siloxy units when the number of moles of Q siloxy units is normalized to 1. In such instances, the greater the value of x, the lesser the crosslink density of MQ resin. The inverse is also true as, when the value of x decreases, the number of M siloxy units decreases, and thus more Q siloxy units are networked without termination via an M siloxy unit. It will be appreciated, however, that the normalized content of Q siloxy units does not imply or limit MQ resins to only one Q unit. Rather, MQ resins typically includes a plurality of Q siloxy units clustered or bonded together, as will be appreciated from the description below.

Typically, the polysiloxane (B) has the following general formula:

(R¹₃SiO_{1/2})ₐ(R²₂SiO_{2/2})_{b}(R'R²SiO_{2/2})_{b}'(R²SiO_{3/2})_{c}(R'SiO_{3/2})_{c'}(SiO_{4/2})_{d},

wherein subscripts a, b, b' c, c', and d are each mole fractions such that a+b+b'+c+c'+d=1, with the provisos that 0<a<1, 0≤b<0.2, 0≤b'≤0.1, 0<c<0.2, 0≤c'≤0.1; 0.4<d<0.7 , 0≤b'+c'≤0.1, and the ratio of subscript a to subscript d is from 0.7 to 1.2 (a:d); each R¹ is independently selected from hydrocarbyl groups having from 1 to 30 carbon atoms, -OH, and H; each R² is independently selected from R¹ and -OX, where each X is independently H, a hydrocarbyl group R having from 1 to 30 carbon atoms, or a polyether moiety as described below; and each R' comprises an independently selected amino group.

With reference to the general formula of the polysiloxane (B) above, hydrocarbyl groups suitable for R¹ include monovalent hydrocarbon moieties, as well as derivatives and modifications thereof, which may independently be substituted or unsubstituted, linear, branched, cyclic, or combinations thereof, and saturated or unsaturated. With regard to such hydrocarbyl groups, the term "unsubstituted" describes hydrocarbon moieties composed of carbon and hydrogen atoms, i.e., without heteroatom substituents. The term "substituted" describes hydrocarbon moieties where either at least one hydrogen atom is replaced with an atom or group other than hydrogen (e.g. a halogen atom, an alkoxy group, an amine group, etc.) (i.e., as a pendant or terminal substituent), a carbon atom within a chain/backbone of the hydrocarbon is replaced with an atom other than carbon (e.g. a heteroatom, such as oxygen, sulfur, nitrogen, etc.) (i.e., as a part of the chain/backbone), or both. As such, suitable hydrocarbyl groups may comprise, or be, a hydrocarbon moiety having one or more substituents in and/or on (i.e., appended to and/or integral with) a carbon chain/backbone thereof, such that the hydrocarbon moiety may comprise, or be, an ether, an ester, etc. Linear and branched hydrocarbyl groups may independently be saturated or unsaturated and, when unsaturated, may be conjugated or nonconjugated. Cyclic hydrocarbyl groups may independently be monocyclic or polycyclic, and encompass cycloalkyl groups, aryl groups, and heterocycles, which may be aromatic, saturated and nonaromatic and/or non-conjugated, etc. Examples of combinations of linear and cyclic hydrocarbyl groups include alkaryl groups, aralkyl groups, etc. General examples of hydrocarbon moieties suitably for use in or as the hydrocarbyl group include alkyl groups, aryl groups, alkenyl groups, alkynyl groups, halocarbon groups, and the like, as well as derivatives, modifications, and combinations thereof. Examples of alkyl groups include methyl, ethyl, propyl (e.g. iso-propyl and/or n-propyl), butyl (e.g. isobutyl, n-butyl, tert-butyl, and/or sec-butyl), pentyl (e.g. isopentyl, neopentyl, and/or tert-pentyl), hexyl, and the like (i.e., other linear or branched saturated hydrocarbon groups, e.g. having greater than 6 carbon atoms). Examples of aryl groups include phenyl, tolyl, xylyl, naphthyl, benzyl, dimethyl phenyl, and the like, as well as derivatives and modifications thereof, which may overlap with alkaryl groups (e.g. benzyl) and aralkyl groups (e.g. tolyl, dimethyl phenyl, etc.). Examples of alkenyl groups include vinyl, allyl, propenyl, isopropenyl, butenyl, isobutenyl, pentenyl, heptenyl, hexenyl, cyclohexenyl groups, and the like, as well as derivatives and modifications thereof. General examples of halocarbon groups include halogenated derivatives of the hydrocarbon moieties above, such as halogenated alkyl groups (e.g. any of the alkyl groups described above, where one or more hydrogen atoms is replaced with a halogen atom such as F or CI), aryl groups (e.g. any of the aryl groups described above, where one or more hydrogen atoms is replaced with a halogen atom such as F or CI), and combinations thereof. Examples of halogenated alkyl groups include fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl, 2,2-difluorocyclopropyl, 2,3-difluorocyclobutyl, 3,4-difluorocyclohexyl, 3,4-difluoro-5-methylcycloheptyl, chloromethyl, chloropropyl, 2-dichlorocyclopropyl, 2,3-dichlorocyclopentyl, and the like, as well as derivatives and modifications thereof. Examples of halogenated aryl groups include chlorobenzyl, pentafluorophenyl, fluorobenzyl groups, and the like, as well as derivatives and modifications thereof.

In certain embodiments, at least one R¹ is a substituted or unsubstituted hydrocarbyl group having from 1 to 30 carbon atoms. For example, in some such embodiments, the at least one R¹ is an independently selected substituted or unsubstituted alkyl group, such as an alkyl group having from 1 to 24, alternatively from 1 to 18, alternatively from 1 to 16, alternatively from 1 to 12, alternatively from 1 to 10, alternatively from 1 to 8, alternatively from 1 to 6, carbon atoms. Specific examples of alkyl groups include methyl groups, ethyl groups, propyl groups (e.g. n-propyl and iso-propyl groups), butyl groups (e.g. n-butyl, sec-butyl, iso-butyl, and tert-butyl groups), pentyl groups, hexyl groups, heptyl groups, etc., and the like, as well as derivatives and/or modifications thereof. Examples of derivatives and/or modifications of such alkyl groups include substituted versions thereof. For example, R¹ may comprise, alternatively may be, a hydroxyl ethyl group, which will be understood to be a derivative and/or a modification of the ethyl groups described above. Likewise, R¹ may comprise, alternatively may be, an independently selected substituted or unsubstituted alkenyl groups having from 2 to 6 carbon atoms, such as from 2 to 5, alternatively from 2 to 4, alternatively from 2 to 3 carbon atoms. In certain embodiments, the polysiloxane (B) comprises at least two R¹ groups comprising alkenyl functionality (i.e., at least two R¹ are selected from substituted or unsubstituted alkenyl groups). In these or other embodiments, each R¹ is independently selected from H, -OH, C1-C6 alkyl groups, aryl groups, alkenyl groups, phenyl groups, vinyl groups, and combinations thereof. In certain embodiments, at least 50, alternatively at least 60, alternatively at least 70, alternatively at least 80, alternatively at least 90, mol% of all R¹ groups are hydrocarbyl groups.

With continued reference to the general formula of the polysiloxane (B) above, each R² is independently selected from R¹ and -OX, where each X is independently H (i.e., such that R² is a hydroxy group), the hydrocarbyl group R having from 1 to 30 carbon atoms (i.e., such that R² is a hydrocarbyloxy group of formula -OR), or a polyether moiety. Where X is the hydrocarbyloxy group, the hydrocarbyl group R may be selected from any of the hydrocarbyl groups having from 1 to 30 carbon atoms set forth above. As such, examples of hydrocarbyloxy groups suitable for X include alkoxy and aryloxy groups. Examples of alkoxy groups include methoxy, ethoxy, propoxy, butoxy, benzyloxy, and the like, as well as derivatives and modifications thereof. Examples of aryloxy groups include phenoxy, tolyloxy, pentafluorophenoxy, and the like, as well as derivatives and modifications thereof. In some embodiments, each R² is independently selected from R¹ and -OR, where each R¹ is independently selected from H, -OH, and alkyl and aryl groups containing 1 to 30 carbon atoms, and each R is independently selected from alkyl and aryl groups containing 1 to 30 carbon atoms. In these or other embodiments, each R² is independently selected from -OH and -OR, where each R is independently selected from alkyl and aryl groups containing 1 to 30 carbon atoms.

As introduced above, in certain embodiments, at least one R² is of formula and -OX, where X is the polyether moiety. In these embodiments, the polyether moiety is not particularly limited, and generally comprises an oxyalkylene segment of general formula (CₙH₂ₙO)ₘ, where subscript m is from 1 to 50 and subscript n is independently 2, 3, or 4 in each moiety represented by subscript m. In certain embodiments, subscript m is from 1 to 45, such as from 1 to 40, alternatively from 1 to 30, alternatively from 1 to 25, alternatively from 1 to 20, alternatively from 1 to 15. In specific embodiments, subscript m is at least 2, such that the polyoxyalkylene moiety may comprise one or more oxyalkylene units selected from oxyethylene units (e.g. -(C₂H₄O)-, i.e., where subscript n is 2), oxypropylene units (e.g. -(C₃H₆O)-, i.e., where subscript n is 3), and oxybutylene units (e.g. -(C₄H₈O)-, i.e., where subscript n is 4). When the oxyalkylene segment comprises more than one type of oxyalkylene unit (i.e., is a polyoxyalkylene), the oxyalkylene units may be arranged in any fashion, such as in block form (e.g. ordered blocks and/or random blocks), randomized form, or combinations thereof. In specific embodiments, the oxyalkylene segment comprises both oxyethylene and oxypropylene units. In some such embodiments, the oxyalkylene segment is an oxyethylene-oxypropylene block copolymer.

The polyether moiety may comprise more than one oxyalkylene segment. For example, in certain embodiments, X comprises a polyether moiety having the general formula -Y-R³(-[Y]ⱼ-Z)ᵢ, wherein R³ is a substituted or unsubstituted hydrocarbon segment, each Y is an independently selected oxyalkylene segment of general formula (CₙH₂ₙO)ₘ as described above, Z is a terminal group, subscript i is from 0 to 8, and subscript j is independently 0 or 1 in each moiety indicated by subscript i. In these embodiments, R³ is an at least divalent hydrocarbon linking group. More specifically, as used herein in this context, the valency of the hydrocarbon segment R³ refers to the number of substituents of subformula (-[Y]ⱼ-Z) bonded thereto in addition to the oxyalkylene segment Y. As such, the valency of the hydrocarbon segment R³ in this context may be described as subscript i+1.

Typically, each hydrocarbon segment R³ independently comprises one or more substituted or unsubstituted hydrocarbon groups, i.e., a hydrocarbon group that is optionally modified or substituted, e.g. with pendant alkoxy, carbonyl, siloxy, silyl, amino, amido, acetoxy, or aminoxy groups and/or internal O, N, or S atoms (i.e., in the backbone). For example, in some embodiments, the polysiloxane (B) comprises at least one X corresponding to the general polyether moiety formula above, where the hydrocarbon segment R³ comprises, alternatively is, a linear or branched hydrocarbon group having from 3 to 30 carbon atoms, optionally comprising one or more aromatic groups, ether groups, amine groups, or a combination thereof. In some such embodiments, the hydrocarbon segment R³ is a C1-C20 hydrocarbon group. In these or other embodiments, each hydrocarbon segment R³ independently comprises an aromatic group, an ether group, an amine group, or a combination thereof. As will be appreciated from the description herein, the ether and amine groups of the hydrocarbon segment R³ set forth above may be internal (e.g. comprising an O or N atom in the backbone of the linear or branched hydrocarbon group) or pendant (e.g. comprising an alkoxy or amine group bonded to the backbone of the linear or branched hydrocarbon group).

Each hydrocarbon segment R³ may be independently linear or branched. More specifically, as will be appreciated from the description herein, R³ typically comprises up to i number of branches (i.e., from 0 to 8 branches), where subscript j is 1 for each branch off from R³ to the terminal group Z. In certain embodiments, each hydrocarbon segment R³ comprises a branched hydrocarbon group having from 3 to 16 carbon atoms. In some embodiments, each oxyalkylene segment Y independently has the formula (C₂H₄O)ₓ(C₃H₆O)_{y}(C₄H₈O)_{z}, where subscript x is from 1 to 50, subscript y is from 0 to 50, and subscript z is from 0 to 50, and where units indicated by subscripts x, y and z may be in randomized or block form in the oxyalkylene segment.

In some embodiments, the polysiloxane (B) comprises at least one X corresponding to the general polyether moiety formula above, where subscript i is 0 and each hydrocarbon segment R³ independently comprises a linear or branched hydrocarbon group having from 3 to 30 carbon atoms. For example, when the polysiloxane (B) comprises at least one X corresponding to the general polyether moiety formula above, the polysiloxane (B) may be reactive with isocyanate functionality, as described below. However, the polysiloxane (B) may be utilized in the composition of this disclosure even when not reactive with isocyanate functionality. In these or other embodiments, the polysiloxane (B) comprises at least one X where subscript i is 1 and the hydrocarbon segment R³ comprises at least one group selected from linear or branched hydrocarbon groups having from 3 to 30 carbon atoms, phenols, tetrahydrofurans, and alkyl amines, each optionally substituted with one or more alkoxy groups. In these or other embodiments, the polysiloxane (B) comprises at least one X where subscript i is at least 2, and the hydrocarbon segment R³ comprises at least one group selected from linear or branched hydrocarbon groups having from 3 to 30 carbon atoms, alkyl amines, polyamines, polyamides, polyaziridines, polyphenols, and polyesters.

Typically, each terminal group Z is independently selected from H (i.e., such that the polyether moiety is terminally hydroxy-functional) or a resinous silicone moiety (i.e., from condensation of terminal hydroxy-functionality with a condensable silicon-bonded moiety of the polysiloxane (B)). For example, where subscript i is at least 1, the terminal group Z may represent a cross-link to another silanol group of the polysiloxane (B). Similarly, when i > 1, the polysiloxane (B) may comprise more than one cross-link. One of skill in the art will appreciate that the presence of such cross-linking in, as well as the cross-linking density of, the polysiloxane (B) in the isocyanate-reactive component depends on many factors, such as the hydroxyl (e.g. silanol) functionality of the silicone resin selected, the functionality of the polyether alcohol compound (C) selected, the ratio of silicone resin to polyether alcohol compound (C) utilized to prepare the isocyanate-reactive component, the degree of conversion, etc., as described below with respect to the method. Likewise, the presence of such cross-linking can be ascertained by methods known in the art, such as via rheological measurements of gel points due to the increase of average molecular weights in response to cross-linking (i.e., where the gel point indicates the weight-average molecular weight diverging toward infinity). For example, a rheometer (e.g. a rheometrics mechanical spectrometer using parallel plate geometry) may be utilized to carry out a frequency sweep experiment to determine dynamic storage modulus, equilibrium modulus, and changes in moduli during preparation of the isocyanate-reactive component. The full scope of the terminal group Z, as well as the potential for cross-linking of the polysiloxane (B), will be better appreciated in view of the method described herein.

Each R' independently comprises an amino group. In certain embodiments, each R' is an amino group. The amino group of R' may be of formula -N(H)_{f}R_{2-f}, where each R is independently selected and defined above, i.e., each R is an independently selected hydrocarbyl group, and where subscript f is independently 0, 1, or 2. In other embodiments, each R' independently comprises a hydrocarbon group substituted with an amino group. Suitable hydrocarbon groups are described above. In specific embodiments, each R' independently comprises an aliphatic hydrocarbon group substituted with an amino group. The aliphatic hydrocarbon group can be linear or cyclic, and is typically saturated. In specific embodiments, each R' comprises an alkylamino group. For example, each R' can be of formula - (CH₂)_{g}N(H)_{f}R_{2-f}, where each subscript g is independently from 1 to 30, alternatively from 1 to 25, alternatively from 1 to 20, alternatively from 1 to 15, alternatively from 1 to 10, alternatively from 1 to 8, alternatively from 1 to 6, alternatively from 1 to 4, alternatively from 2 to 4, and R' and subscript f are defined above. In specific embodiments, subscript g is 3 and subscript f is 2 such that each R' is of formula -(CH₂)₃N(H)₂.

With continued reference to the general formula of the polysiloxane (B) above, subscripts a, b, b', c, c', and d are each mole fractions such that a+b+b'+c+c'+d=1. As will be appreciated by those of skill in the art, subscripts a, b, c, d, and e correspond to M, D, T, and Q siloxy units, respectively. Both of subscripts b and b' in the general formula above indicate D siloxy units, and both of subscripts c and c' in the general formula above indicate T siloxy units, but with different silicon-bonded substituents (R² vs. R'), respectively. In general, fraction of each siloxy unit is selected such that 0<a<1, 0≤b<0.2, 0≤b'≤0.1, 0<c<0.2, 0≤c'≤0.1, 0.4<d<0.7 , and 0≤b'+c'≤0.1, i.e., where the polysiloxane (B) is optionally free from D siloxy units (including those represented by subscripts b and/or b'), optionally free from T siloxy units indicated by subscript c', but comprises at least one each of M, T, and Q siloxy units (as indicated by subscripts a, c, and d). It will be appreciated, however, that in such embodiments, the polysiloxane (B) will generally be configured such that R² is -OX in at least one, alternatively the majority, alternatively substantially all of, the T siloxy units indicated by subscript c and present therein. Likewise, while optionally free from D siloxy units, the polysiloxane (B) may comprise a limited proportion of D siloxy units. Typically, however, subscripts b and c are less than 0.2, collectively (i.e., b+c≤0.2). In certain embodiments, subscript a is selected to be from 0.3 to 0.6. The subscript d is selected to be from 0.4 to 0.7. In specific embodiments, subscript c is 0. In other embodiments, subscript c' is from greater than 0 to 0.1, alternatively from greater than 0 to 0.05, alternatively from greater than 0 to 0.04, alternatively from 0.01 to 0.04. In other specific embodiments, subscript b' is 0. In yet other embodiments, subscript b' is from greater than 0 to 0.1, alternatively from greater than 0 to 0.05, alternatively from greater than 0 to 0.04, alternatively from 0.01 to 0.04. In further embodiments, b' and c' are each 0. In other embodiments, (b'+c') is from greater than 0 to 0.1, alternatively from greater than 0 to 0.05, alternatively from greater than 0 to 0.04, alternatively from 0.01 to 0.04.

It will be appreciated that subscripts a and d generally refer to the MQ resinous portion of the polysiloxane (B), such that the ratio of subscript a to subscript d may be used to characterize the polysiloxane (B). The ratio of M siloxy units indicated by subscript a to Q siloxy units indicated by subscript d is from 0.7 to 1.2 (a:d).

As will be appreciated in view of the method further below, the features and properties of the polysiloxane (B) will be selected and controlled by the particular components utilized in preparing the isocyanate-reactive component as a whole.

As introduced above, the isocyanate-reactive component also comprises the polyether alcohol compound (C). Typically, the polyether alcohol compound (C) has the general formula HO-Y-R³(-[Y]ⱼ-H)ᵢ, where each Y, R³, subscript i, and subscript j are as defined above. More specifically, R³ is a substituted or unsubstituted hydrocarbon segment, each Y is an independently selected oxyalkylene segment, subscript i is from 0 to 8, and subscript j is independently 0 or 1 in each moiety indicated by subscript i. Additional description and examples of the polyether alcohol compound (C) are provided below. However, as will be appreciated in further detail in view of the method described herein, the groups indicated by Y and R³ in the general formula of the polyether alcohol compound (C) are the same (i.e., in terms of scope) as those same groups indicated above with respect to the polyether moiety of the polysiloxane (B). As such, the description of each Y and R³, as well as the moieties indicated by subscripts j and i, applies equally to the conserved portions of the formulae of both the polyether moiety of the polysiloxane (B) and the polyether alcohol compound (C).

In general, the polyether alcohol compound (C) comprises the alkoxylation reaction product of (b-1) a compound comprising at least one alkoxylatable group (e.g. a functional group comprising a labile hydrogen atom bonded to a nucleophilic O, N, or S atom, such as an -OH,-NH, or SH group) (i.e., an alkoxylatable compound (b-1)), and (b-2) an alkoxylation agent (e.g. an alkylene oxide, polyoxyalkylene compound, etc.) which are described in turn below. As will be understood by those of skill in the art, the alkoxylation reaction is not limited, and will be selected in view of the particular alkoxylatable compound (b-1) and alkoxylation agent (b-2) utilized.

Typically, the alkoxylatable compound (b-1) is an organic alcohol, i.e., an organic compound comprising a carbon backbone and at least one hydroxyl (i.e., -OH) group. In such embodiments, the alkoxylatable compound (b-1) may be referred to more specifically as an alcohol compound (b-1). As will be understood in view of the examples and description below, the alcohol compound (b-1) may be a mono-ol (i.e., comprise but one hydroxyl functional group) or a polyol (i.e., comprise at least two hydroxyl groups), such as a diol, triol, etc. The carbon backbone of the alcohol compound (b-1) may be substituted or unsubstituted, e.g. with any of the functional groups described herein. When substituted, the carbon backbone of the alcohol compound (b-1) may comprise pendant substitutions (i.e., in place of hydrogen atoms attached to the carbon backbone) or substitutions of carbon atoms within the backbone itself (e.g. by other heteroatoms, such as O, S, N, etc.). As such, it is to be appreciated that, while characterized or otherwise referred to as an organic alcohol, the alcohol compound (b-1) may be alternatively or further defined in view of additional functionality when present (e.g. as an amino alcohol, etc.). Additionally, the carbon backbone may be linear or branched, and may thus comprise linear, branched, and/or cyclic hydrocarbon segments.

As will be understood in view of the description herein, the alcohol compound (b-1) typically corresponds to the general formula HO-R³(-OH)ᵢ, where R³ and subscript i are as defined above. More specifically, R³ is a hydrocarbon segment and subscript i is from 0 to 8. In such embodiments, it will be appreciated that the hydrocarbon segment R³ represents the carbon backbone of the alcohol compound (b-1), which, as indicated by subscript i, may comprise may comprise from 0 to 8 hydroxyl groups in addition to the required hydroxyl group.

In certain embodiments, subscript i is 0, such that the alcohol compound (b-1) is an alcohol of general formula HO-R³. In some such embodiments, R³ comprises, alternatively is, a linear or branched hydrocarbon group having from 3 to 30 carbon atoms. For example, in some embodiments, R³ is a branched hydrocarbon group having from 3 to 30 carbon atoms. In some such embodiments, alcohol compound (b-1) has the formula: 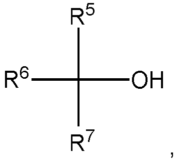 where R⁵, R⁶, and R⁷ are independently selected from C1-C13 alkyl groups. For example, in some such embodiments, R⁵and R⁶ are each independently selected from C1-4 alkyl groups, and R⁷ is H or a C1-C13 alkyl group. In some of these embodiments, R³ comprises a total of from 7 to 16 carbon atoms, such as from 9 to 12 carbon atoms. In some embodiments, R³ comprises a branching degree of at least 3. In this context, the term "branching degree" as used herein means the total number of methyl (-CH₃) groups minus 1. For instance, an R³ comprising an alkyl group comprising four methyl group substituents comprises a branching degree of 3. In some embodiments, R⁵ is an alkyl group comprising from 3 to 12 carbon atoms, such a C3-C8 alkyl group, or, alternatively, a C4-C6 alkyl group. In such embodiments, R⁵ comprises at least 2 methyl groups. In these or other embodiments, R⁶ is an alkyl group comprising from 3 to 12 carbon atoms, such as a C4-C10 alkyl group, alternatively a C6-C8 alkyl group. In some embodiments, R⁷ comprises at least 2 methyl groups. For example, in certain embodiments, R⁷ is a C1-C3 alkyl group. In other embodiments, R⁷ is H. In some embodiments, R⁵ is CH₃(CH₂)₂CH(CH₃)(CH₂)₂CH(CH₃), and R⁶ is H, and R⁷ is CH₃. In specific embodiments, the alcohol compound (b-1) is (3-methyl-6-ethyl)-2-nonanol.

In certain embodiments, subscript i is 1, such that the alcohol compound (b-1) is a diol of general formula HO-R³-OH, where the hydrocarbon segment is a divalent linking group. In certain embodiments, for example, R³ comprises, alternatively is, an alkyl group (i.e., such that the alcohol compound (b-1) is a glycol) or substituted alkyl group (e.g. a diethylamino group, such that the alcohol compound (b-1) is a diethanolamine), an aryl group (e.g. a phenyl, benzyl, tolyl, etc.), a tetrahydrofuran group, or other difunctional materials, such as those derived from ring opening of epoxy adducts or alkoxy diols.

In particular embodiments, subscript i is ≥ 2, such that the alcohol compound (b-1) may be further defined as a polyol, such as a triol, tetraol, etc. In such embodiments, the alcohol compound (b-1) is exemplified by glycerols, pentaerythritols, sugar alcohols (e.g. sorbitol, xylitol, mannitol, etc.), and the like. In some such embodiments, R³ comprises, alternatively is selected from alkyl amines, polyamines, polyamides, polyaziridines, polyphenols, and polyesters. In some embodiments, for example, R³ comprises, alternatively is, a phenol formaldehyde resin, an epoxy adduct of a glycidyl ether with a polyol, an epoxy adduct of a glycidyl ether with a diamine or polyamine (e.g. such as a secondary diamine). In any of such embodiments, subscript i may be from 2 to 8, such that alcohol compound (b-1) comprises from 2 to 8 hydroxyl groups, such as from 3 to 8, alternatively 3 to 6, alternatively from 3 to 5, hydroxyl groups.

It is to be appreciated that the other polyols and alcohols may be used as the alcohol compound (b-1) to prepare the polyether alcohol compound (C) as well. For example, in certain embodiments, the alcohol compound (b-1) is selected from polyether polyols, polyester polyols, polycarbonate polyols, acrylic polyols, polyols derived from isocyanate pre-polymers (e.g. those having a functionality from 2 to 8, etc.), and the like.

The alkoxylation agent (b-2) is not limited, and may be or include any alkoxylation compound suitable for substituting the alkoxylatable compound (b-1) to give the polyether alcohol compound (C) as described herein. Typically, the alkoxylation agent (b-2) is selected from alkylene oxides, polyoxyalkylene compounds, and combinations thereof. For example, in certain embodiments, the alkoxylation agent (b-2) is selected from ethylene oxide, propylene oxide, butylene oxide, and combinations thereof. In other embodiments, the alkoxylation agent (b-2) is selected from polyoxyethylenes, polyoxypropylenes, polyoxybutylenes, and combinations thereof (e.g. in the form of random or block polymers). One of skill in the art will appreciate that the term "alkoxylation" as used herein, e.g. with regard to precursors (b-1) and (b-2) of the polyether alcohol compound (C), may be considered functional and/or descriptive, and includes ethers/etherification products as well.

It will be appreciated by those of skill in the art that the number of hydroxyl groups present on the alkoxylatable compound (b-1) will influence the overall structure of the polyether alcohol compound (C) itself. In particular, the polyether alcohol compound (C) may comprise up to i=1 polyoxyalkylene groups, i.e., from alkoxylating the alkoxylatable group(s) of the alcohol compound (b-1) with the alkoxylation agent (b-2).

With regard to the polyether alcohol compound (C) itself, e.g. corresponding to the general formula HO-Y-R³(-[Y]ⱼ-H)ᵢ, each oxyalkylene segment Y may independently have the formula (C₂H₄O)ₓ(C₃H₆O)_{y}(C₄H₈O)_{z}, where subscript x is from 1 to 50, subscript y is from 0 to 50, and subscript z is from 0 to 50, and where units indicated by subscripts x, y and z may independently be in randomized or block form in each oxyalkylene segment. In certain embodiments, in each oxyalkylene segment Y, subscript x is from 1 to 20, subscript y is from 0 to 20, and subscript z is from 0 to 20. In some such embodiments, x+y+z= from 1 to 50, such as from 1 to 20, alternatively from 10 to 20. In specific embodiments, subscript x is from 2 to 20, and subscripts y and z are both 0, such that the polyether alcohol compound (C) may be further defined as a polyoxyethylene alcohol.

In certain embodiments, the polyether alcohol compound (C) is a nonionic surfactant. For example, in some such embodiments, the polyether alcohol compound (C) may be selected from straight-chain linear ethoxylates, branched ethoxylates (e.g. polyethylene glycol p-(1,1,3,3-tetramethylbutyl)-phenyl ether), amine ethyoxylates (e.g. tertiary amine ethoxylates, fatty amine ethoxylates and/or propoxylates), ethoxylyated, propoxylated, and/or butoxylated glycols, and the like.

It will be appreciated from the description above that, in some embodiments, the polyether alcohol compound (C) may have the general formula HO-(C₂H₄O)ₓ(C₃H₆O)_{y}(C₄H₈O)_{z}-CR⁵R⁶R⁷, where R⁵, R⁶, R⁷, and subscripts x, y, and z are as defined above. In some such embodiments, for example, subscript x is from 1 to 40, subscripts y and z are selected such that y+z=1-6, R⁵ and R⁶ are independently selected C1-C4 alkyl groups, and R⁷ is H or C1-C13 alkyl. In some such embodiments, the moiety indicated by sub formula -CR⁵R⁶R⁷ comprises a total of from 7 to 16 carbon atoms and a branching degree of at least 3.

In some embodiments, the polyether alcohol compound (C) has the following formula: 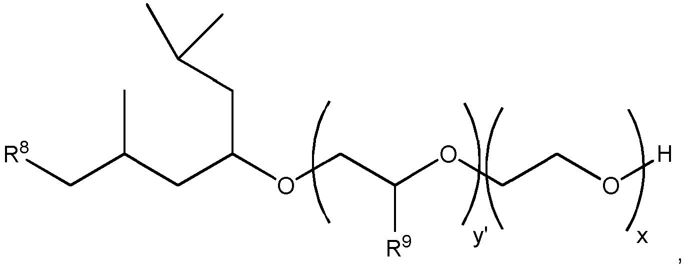 where R⁸ is H or isopropyl; R⁹ is CH₃ or CH₂CH₃; subscript y' is from 1 to 5, such as from 1 to 4, alternatively from 2 to 4; and subscript x is from 2 to 30, such as from 2 to 20, alternatively from 2 to 10, alternatively from 2 to 9, alternatively from 5 to 9. In some of these embodiments, R⁸ is H and R⁹ is CH₃, such that the polyether alcohol compound (C) has the formula: 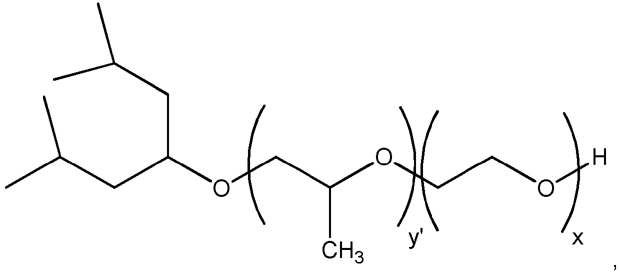 where subscripts y' and x are as described above. In other embodiments, R⁸ is isopropyl, such that the polyether alcohol compound (C) has the formula: 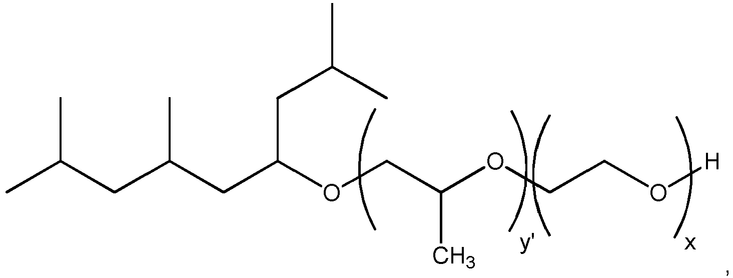 where subscripts y' and x are as described above.

In general, the polyether alcohol compound (C) may be prepared or otherwise obtained with a narrow molecular weight distribution, as represented the polydispersity index (PDI) (i.e., the weight average molecular weight/number average molecular weight (Mw/Mn), e.g. as determined by gel permeation chromatography). For example, in certain embodiments, the polyether alcohol compound (C) comprises a PDI of 1.15 or less, alternatively of 1.1 or less. In these or other embodiments, the polyether alcohol compound (C) comprises a low level of residual unreacted alkoxylatable compound (b-1), e.g. alcohol compound (b-1) (i.e., un-alkoxylated alcohol). For example, in some embodiments, the polyether alcohol compound (C) contains less than 3 weight percent, alternatively less than 2 wt.%, or less, alternatively 1 wt.% percent or less, alternatively 0.5 wt.% of residual/unreacted alcohol compound (b-1). In certain embodiments, the isocyanate-reactive component comprises a mixture of more than one polyether alcohol compound (C), such as 2, 3, 4, 5, or more individual polyether alcohol compounds (B), which are independently selected.

The isocyanate-reactive component may be formed via any order of addition of its components. In certain embodiments, the polysiloxane (B) is combined with the polyether alcohol compound (C) and optionally an aminosilicon compound to form a mixture, and the mixture is combined with the polyol (A) to give the isocyanate-reactive component. The amount of components (B) and (C), as well as the aminosilicon compound, if utilized in the mixture, may vary. In some embodiments, for example, the mixture comprises from 10 to 80 wt.% of the polysiloxane (B), based on the total weight of the mixture. Likewise, in these or other embodiments, the mixture comprises from 10 to 95 wt.% of the polyether alcohol compound (C), based on the total weight of the mixture. In specific embodiments, the mixture comprises from 10 to 80, alternatively from 20 to 80, alternatively from 20 to 70, alternatively from 30 to 70 wt.% of the polysiloxane (B), based on the total weight of the mixture. In these embodiments, the balance of the mixture may comprise the polyether alcohol compound (C). Typically, the mixture is present in the isocyanate-reactive component in an amount of from greater than 0 to 25, alternatively from greater than 0 to 20, alternatively from greater than 0 to 15, alternatively from greater than 0 to 10, wt.% based on the total weight of the polyol (A) utilized.

In certain embodiments, the mixture utilized to prepare the isocyanate-reactive component, and/or the isocyanate-reactive component itself, further comprises an aminosilicon compound. Generally, the aminosilicon compound is utilized to impart the D siloxy units indicated by subscript b', if present, and/or the T siloxy units indicated by subscript c', if present, in the polysiloxane (B), as described below with reference to the method of preparing the composition. Use of the aminosilicon compound when preparing the polysiloxane (B) and/or the mixture is optional. When utilized, some residual amount of the aminosilicon compound may be present in the mixture and/or the isocyanate-reactive component, i.e., the aminosilicon compound may not be fully consumed in preparing the polysiloxane (B) and/or the mixture.

The aminosilicon compound includes a silicon-bonded substituent comprising an amino group, which can become the substituent indicated by R' in the polysiloxane (B), if present. Typically, the aminosilicon compound also includes silicon-bonded hydroxyl and/or hydrolysable groups, such as alkoxy groups.

In specific embodiments, the aminosilicon compound comprises, alternatively is, an aminosilane, for example an aminosilane of formula R'R¹⁰ₕSi(OR¹⁰)₃₋ₕ, where subscript h is 0 or 1, R' is defined above, and each R¹⁰ is an independently selected alkyl group having from 1 to 18, alternatively from 1 to 16, alternatively from 1 to 14, alternatively from 1 to 12, alternatively from 1 to 10, alternatively from 1 to 8, alternatively from 1 to 6, alternatively from 1 to 4, carbon atoms. In one embodiment, subscript h is 0 and the aminosilicon compound is of formula R'Si(OR¹⁰)₃. One specific example of such an aminosilane is 3-propylaminotriethoxysilane. In another embodiment, subscript h is 1 and the aminosilicon compound (C) is of formula R'R¹⁰Si(OR¹⁰)₂. One specific example of such an aminosilane is 3-propylamino(diethoxy)methylsilane.

When the aminosilicon compound is utilized and is of formula R'Si(OR¹⁰)₃, at least some of the aminosilicon compound utilized generally hydrolyses and condenses to give a T siloxy unit in the polysiloxane (B) indicated by subscript c', i.e., of formula R'SiO_{3/2}. Typically, each alkoxy group of the aminosilicon compound fully hydrolyzes and condenses to give such a T siloxy unit in the polysiloxane (B). During preparation of the polysiloxane (B), when utilized, the aminosilicon compound may give partial condensate products in a reaction intermediary of the polysiloxane (B). When the aminosilicon compound is utilized and is of formula R'Si(OR¹⁰)₃, the partial condensate products are of formula (R'(OZ)_{q}SiO_{3-q/2}), where subscript q is independently 0, 1, or 2, and each Z is independently H or R¹⁰.

When the aminosilicon compound is utilized and is of formula R'R¹⁰Si(OR¹⁰)₂, at least some of the aminosilicon compound utilized generally hydrolyses and condenses to give a D siloxy unit in the polysiloxane (B) indicated by subscript b', i.e., of formula R'R²SiO_{2/2}. Typically, each alkoxy group of the aminosilicon compound fully hydrolyzes and condenses to give such a D siloxy unit in the polysiloxane (B). During preparation of the polysiloxane (B), when utilized, the aminosilicon compound may give partial condensate products in a reaction intermediary of the polysiloxane (B). When the aminosilicon compound is utilized and is of formula R'R¹⁰Si(OR¹⁰)₂, the partial condensate products are of formula R'R¹⁰(OZ)rSiO_{2-r/2}, where subscript r is independently 0 or 1, and each Z is independently H or R¹⁰.

Combinations of different aminosilicon compounds may be utilized together as the aminosilicon compound.

The aminosilicon compound is typically present in the mixture in an amount of from 0 to 25, alternatively from 0 to 20, alternatively from 0 to 15, wt.% based on the total weight of the mixture.

The mixture, when utilized in preparing the isocyanate-reactive component, generally has a tunable liquid viscosity. In particular, the mixture generally comprises a viscosity at 25 °C of from 0.1 to 800 Pa·s (100 to 800,000 cps). For example, in certain embodiments, the mixture has a viscosity at 25 °C of from 0.19 to 700 Pa·s (185 cps to 700,000 cps), e.g. depending on the particular polyether alcohol compound (C) selected, the ratio of polysiloxane (B) to the polyether alcohol compound (C) utilized, the presence or absence of the aminosilicon compound, etc. Moreover, as will be appreciated in view of the method below, the ratio of -OX = polyether moiety to -OX = H within the polysiloxane (B) (i.e., the capping ratio) may also be independently selected and controlled to provide the mixture in a liquid form. Because the mixture has a tunable liquid viscosity, the viscosity can be selectively controlled based on desired end use applications and properties thereof.

The mixture may be formed by (I) combining together a solid silicone resin the polyether alcohol compound (C), and optionally the aminosilicon compound to give the mixture comprising the polysiloxane (B), the polyether alcohol compound (C), and optionally the aminosilicon compound. The method also includes (II) liquefying the mixture comprising the polysiloxane (B), the polyether alcohol compound (C), and optionally the aminosilicon compound. As described below, in certain embodiments utilizing the aminosilicon compound, the aminosilicon compound is incorporated during and/or after the step of liquefying the mixture.

As will be appreciated from the description herein, the polyether alcohol compound (C) is capable of liquefying the solid silicone resin, optionally without reacting therewith. As such, the solid silicone resin is typically a solid when combined with the polyether alcohol compound (C), optionally in the presence of a carrier vehicle, as described below. The term "solid" is used herein with reference to the solid silicone resin to describe such silicone as having a softening and/or melting point above room temperature, such that, at room temperature, the silicone resin is solid or substantially solid in the absence of organic solvents.

The solid silicone resin has the following general formula:

(R¹₃SiO_{1/2})ₐ(R⁴₂SiO_{2/2})_{b}(R⁴SiO_{3/2})_{c}(SiO_{4/2})_{d},

where each R⁴ is independently selected from R¹ and -OR, with the proviso that R⁴ is selected from -OH and -OR in at least one T siloxy unit indicated by subscript c, and each R¹, R, and subscripts a, b, c, and d are as defined above.

With regard to the preceding formula, as will be appreciated by those of skill in the art in view of the description herein, the solid silicone resin utilized in the method forms the siloxane backbone of the polysiloxane (B). As such, the description above with regard to the M, D, T, and Q siloxy units indicated by subscripts a, b, c, and d, respectively, of the polysiloxane (B) applies equally to the solid silicone resin of the method. The ratio of M siloxy units indicated by subscript a to Q siloxy units indicated by subscript d is from 0.7 to 1.2 (a:d) in the solid silicone resin. However, as readily understood in the art, though the ranges of subscripts a, b, c, and d are applicable to both the solid silicone resin and the polysiloxane (B), each of subscripts a, b, c, and d may independently differ between the solid silicone resin and the polysiloxane (B). For example, when the method of preparing the composition involves liquefaction, certain siloxane bonds may be cleaved to give SiOZ moieties, where Z is independently H or alkyl. To that end, the polysiloxane (B) may have, for example, fewer Q siloxy units than the solid silicone resin on a mole fraction basis. Alternatively or in addition, the polysiloxane (B) may also have fewer M siloxy groups than the solid silicone resin based on the use and selection of the polyether alcohol compound (C) and optionally the aminosilicon compound, if utilized.

Typically, the solid silicone resin has a weight-average molecular weight of from 2,000 to 30,000, such as from 3,000 to 30,000, alternatively from 4,000 to 30,000, alternatively from 4,000 to 25,000, alternatively from 5,000 to 25,000, alternatively from 5,000 to 20,000, alternatively from 6,000 to 20,000. As understood by those of skill in the art, weight-average molecular weight may be readily determined in Daltons using triple-detector gel permeation chromatography (e.g. with light-scattering, refractive index and viscosity detectors) against a polystyrene standard.

It will be appreciated that the polyether alcohol compound (C) utilized in the mixture (e.g. to cap and/or liquefy the polysiloxane (B)) is the same component as described above with respect to the polyether alcohol compound (C) of the mixture and isocyanate-reactive component. As such, the description above with regard to the polyether alcohol compound (C), and the various portions thereof, also applies equally throughout.

As introduced above, the mixture is formed by combining the solid silicone resin and the polyether alcohol compound (C), and optionally, any other components utilized (collectively, the "method components"). As will be understood by those of skill in the art, there is generally no proactive step required beyond combining the reaction components together, although certain processes, which are described below, may be employed. Moreover, while one aspect of the method includes reacting the solid silicone resin and the polyether alcohol compound (C) (e.g. via condensation reaction) to prepare the polysiloxane (B) and thereby give the mixture, it is to be appreciated that in another aspect, the method may be utilized to prepare the mixture via simply liquefying the polysiloxane (B) (or solid silicone resin) in the presence of the polyether alcohol compound (C), without reacting/capping the same.

Further, as described above, the aminosilicon compound may optionally be utilized in the method. When utilized, the aminosilicon compound can be incorporated at any time of the method of preparing the mixture. For example, in one embodiment, the aminosilicon compound is combined with the solid silicone resin and the polyether alcohol compound (C) such that the aminosilicon compound is present in the mixture. Alternatively or in addition, the aminosilicon compound can be combined with the mixture after its formation. Further still, the aminosilicon compound can be combined during and/or after liquefaction of the mixture, as described below.

With regard to the method components, the solid silicone resin may be prepared or otherwise obtained, i.e., as a prepared resin. Methods of preparing MQ resins such as the solid silicone resin are known in the art, with suitable precursors and starting materials commercially available from various suppliers. Preparing the solid silicone resin, when part of the method, is typically performed prior to combining the same with the polyether alcohol compound (C). The polyether alcohol compound (C) may also be prepared as part of the method, or otherwise obtained for use therein. In particular embodiments, the polyether alcohol compound (C) is prepared via reacting (e.g. alkoxylating) the alkoxylatable compound (b-1) with the alkoxylation agent (b-2). When selecting the alkoxylation agent (b-2), e.g. where an alkylene oxide is utilized, one of skill in the art will appreciate that propylene oxide and/or butylene oxide may be used to increase the flexibility of the product of the alkoxylation and/or the condensation reaction of the method, and thereby alter the viscosity by increasing the fluidity of the polyether alcohol compound (C) and, optionally, the polysiloxane (B) prepared therewith

Typically, the method components are combined in a vessel or reactor to prepare the mixture. The method components may be fed together or separately to the vessel, or may be disposed in the vessel in any order of addition, and in any combination, as exemplified below. The method may further comprise agitating the mixture, e.g. to enhance mixing and contacting together of the method components when combined. Such contacting independently may use other conditions, with (e.g. concurrently or sequentially) or without (i.e., independent from, alternatively in place of) the agitating, and will typically be implemented to assist in preparing the polysiloxane (B) in the mixture and/or liquefying the mixture. Other conditions may be utilized in addition to, or in place of, those described herein, and may be result-effective conditions for enhancing condensation, liquefaction, etc., in the course of the method.

The method may utilize any amount of the method components and, more specifically, may comprise combining the solid silicone resin, the polyether alcohol compound (C), and optionally the aminosilicon compound in varying amounts or ratios contingent on desired properties of the resulting mixture and/or characteristics of the starting materials employed. For example, the solid silicone resin, the polyether alcohol compound (C), and optionally the aminosilicon compound may be utilized in amounts configured to provide a specific cap ratio (i.e., the molar ratio of silanol functionality of the MQ resin to hydroxyl functionality of the polyether alcohol compound (C)) of the polysiloxane (B) prepared therewith (e.g. a cap ratio of from 0.25 to 1.0, such as from 0.5 to 0.75, etc.). Accordingly, as will be understood by those of skill in the art, the solid silicone resin and the polyether alcohol compound (C) may be utilized in a 1:≥1 molar ratio, favoring either component. For example, the solid silicone resin and the polyether alcohol compound (C) may be utilized in a molar ratio of from 1:10 to 10:1, alternatively of from 1:5 to 5:1, alternatively of from 1:2 to 2:1, alternatively of from 1:1.1 to 1.1:1. As shown, an excess (e.g. slight excess, moderate excess, or gross excess) of either component can also be utilized.

The solid silicone resin, the polyether alcohol compound (C), and optionally the aminosilicon compound may be combined in any order, optionally under shear or mixing. For example, in some embodiments the mixture is prepared by combining together the solid silicone resin, the polyether alcohol compound (C), and optionally the aminosilicon compound, optionally with any additional components being utilized. The components may be combined in any order, simultaneously, or any combinations thereof (e.g. in various multi-part compositions which are eventually combined with one another). Likewise, the mixture may be prepared in batch, semi-batch, semi-continuous, or continuous processes, unless otherwise noted herein. Typically, once combined, the components of the mixture are homogenized, e.g. via mixing, which may be performed by any of the various techniques known in the art using any equipment suitable for the mixing. Examples of suitable mixing techniques generally include ultrasonication, dispersion mixing, planetary mixing, three roll milling, etc. Examples of mixing equipment include agitated batch kettles for relatively high-flowability (low dynamic viscosity) compositions, ribbon blenders, solution blenders, co-kneaders, twin-rotor mixers, Banbury-type mixers, mills, extruders, etc., which may be batch-type or continuous compounding-type equipment, and utilized alone or in combination with one or more mixers of the same or different type.

In some embodiments, the solid silicone resin, the polyether alcohol compound (C), and optionally the aminosilicon compound are combined in the presence of a carrier vehicle. The carrier vehicle is not limited and is typically selected for based on the particular solid silicone resin and/or polyether alcohol compound (C) being utilized, a desired end use of the mixture, etc. In general, the carrier vehicle comprises, alternatively is, a solvent, a fluid, an oil (e.g. an organic oil and/or a silicone oil), etc., or a combination thereof.

In some embodiments, the carrier vehicle comprises a silicone fluid. The silicone fluid is typically a low viscosity and/or volatile siloxane. In some embodiments, the silicone fluid is a low viscosity organopolysiloxane, a volatile methyl siloxane, a volatile ethyl siloxane, a volatile methyl ethyl siloxane, or the like, or combinations thereof. Typically, the silicone fluid has a viscosity at 25 °C in the range of 1 to 1,000 mm²/sec. Specific examples of suitable silicone fluids include hexamethylcyclotrisiloxane, octamethylcyclotetrasiloxane, decamethylcyclopentasiloxane, dodecamethylcyclohexasiloxane, octamethyltrisiloxane, decamethyltetrasiloxane, dodecamethylpentasiloxane, tetradecamethylhexasiloxane, hexadeamethylheptasiloxane, heptamethyl-3-{(trimethylsilyl)oxy)}trisiloxane, hexamethyl-3,3, bis{(trimethylsilyl)oxy}trisiloxane pentamethyl{(trimethylsilyl)oxy}cyclotrisiloxane as well as polydimethylsiloxanes, polyethylsiloxanes, polymethylethylsiloxanes, polymethylphenylsiloxanes, polydiphenylsiloxanes, caprylyl methicone, hexamethyldisiloxane, heptamethyloctyltrisiloxane, hexyltrimethicone, and the like, as well as derivatives, modifications, and combinations thereof. Additional examples of suitable silicone fluids include polyorganosiloxanes with suitable vapor pressures, such as from 5 x 10⁻⁷ to 1.5 x 10⁻⁶ m²/s.

In certain embodiments, the carrier vehicle comprises an organic fluid, which typically comprises an organic oil including a volatile and/or semi-volatile hydrocarbon, ester, and/or ether. General examples of such organic fluids include volatile hydrocarbon oils, such as C₆-C₁₆ alkanes, C₈-C₁₆ isoalkanes (e.g. isodecane, isododecane, isohexadecane, etc.), C₈-C₁₆ branched esters (e.g. isohexyl neopentanoate, isodecyl neopentanoate, etc.), and the like, as well as derivatives, modifications, and combinations thereof. Additional examples of suitable organic fluids include aromatic hydrocarbons, aliphatic hydrocarbons, alcohols having more than 3 carbon atoms, aldehydes, ketones, amines, esters, ethers, glycols, glycol ethers, alkyl halides, aromatic halides, and combinations thereof. Hydrocarbons include isododecane, isohexadecane, Isopar L (C₁₁-C₁₃), Isopar H (C₁₁-C₁₂), hydrogentated polydecene. Ethers and esters include isodecyl neopentanoate, neopentylglycol heptanoate, glycol distearate, dicaprylyl carbonate, diethylhexyl carbonate, propylene glycol n-butyl ether, ethyl-3 ethoxypropionate, propylene glycol methyl ether acetate, tridecyl neopentanoate, propylene glycol methylether acetate (PGMEA), propylene glycol methyl ether (PGME), octyldodecyl neopentanoate, diisobutyl adipate, diisopropyl adipate, propylene glycol dicaprylate/dicaprate, octyl ether, octyl palmitate, and combinations thereof. It will be appreciated that some examples of the organic fluids above (e.g. glycol ethers) may overlap in description with the polyether alcohol compound (C), which may itself be utilized as a carrier vehicle, or in combination with another carrier vehicle described herein. In some embodiments, the method is carried out free from, alternatively substantially free from, organic fluids meeting the description of the polyether alcohol compound (C) (i.e., other than the polyether alcohol compound (C) itself).

In some embodiments, the carrier vehicle comprises an organic solvent. Examples of organic solvents include those comprising an alcohol, such as methanol, ethanol, isopropanol, butanol, and n-propanol; a ketone, such as acetone, methylethyl ketone, and methyl isobutyl ketone; an aromatic hydrocarbon, such as benzene, toluene, and xylene; an aliphatic hydrocarbon, such as heptane, hexane, and octane; a halogenated hydrocarbon, such as dichloromethane, 1,1,1-trichloroethane, and chloroform; dimethyl sulfoxide; dimethyl formamide, acetonitrile; tetrahydrofuran; white spirits; mineral spirits; naphtha; n-methylpyrrolidone; and the like, as well as derivatives, modifications, and combination thereof. In certain embodiments, the carrier vehicle comprises a polar organic solvent, such as a solvent compatible with water. Specific examples of such polar organic solvents utilized in certain embodiments include methanol, ethanol, 1-propanol, 2-propanol, 2-methyl-2-propanol, 2-butanone, tetrahydrofuran, acetone, and combinations thereof. Other carrier vehicles may also be utilized in place of, in addition to, or in combination with, those described herein. In certain embodiments, the carrier vehicle comprises, alternatively is, an aliphatic and/or aromatic hydrocarbon solvent such as xylenes, etc., a siloxane solvent such as hexamethylene disiloxane (HMDSO), D4 or D5 cyclics or other such siloxanes, or a combination thereof. In other embodiments, the method is carried out substantially free from certain solvents. For example, in some embodiments, the method is carried out free from, alternatively substantially free from, hexamethylene disiloxane (HMDSO), D4 cyclics, and/or D5 cyclics. In these or other embodiments, the method is carried out free from, alternatively substantially free from benzene, toluene, ethylbenzene, and xylenes (i.e., BTEX solvents). In these or other embodiments, the method is carried out free from, alternatively substantially free from aromatic solvents.

In certain embodiments, the solid silicone resin is combined with the carrier vehicle prior to being combined with the polyether alcohol compound (C) and optionally the aminosilicon compound. In other embodiments, however, the polyether alcohol compound (C) is combined with the carrier vehicle and optionally the aminosilicon compound prior to being combined with the solid silicone resin or, alternatively, the components are combined at substantially the same time to give the mixture. Parameters associated with conditions under which these components are combined (e.g. temperature, pressure, etc.) may also be controlled. However, the method may be carried out at ambient conditions. Typically, the solid silicone resin, the polyether alcohol compound (C), optionally the aminosilicon compound, and the carrier vehicle are combined together at a temperature less than 45 °C (i.e., cold-processed) to give the mixture. In some embodiments, however, the solid silicone resin, polyether alcohol compound (C), optionally the aminosilicon compound, and the carrier vehicle are combined together at a temperature less than 40 °C, alternatively less than 35 °C, alternatively less than 30 °C, alternatively at around ambient temperature.

In some embodiments, the method comprises reacting the solid silicone resin and the polyether alcohol compound (C) to prepare the polysiloxane (B) in the mixture. In these or other embodiments, when the method utilizes the aminosilicon compound, the method may further comprise reacting the solid silicone resin or a reaction intermediary formed by reacting the solid silicone resin and the polyether alcohol compound (C) with the aminosilicon compound to prepare the polysiloxane (B). Generally, the aminosilicon compound hydrolyzes and condenses to give a T siloxy unit having amino functionality in the polysiloxane (B). As introduced above, the reaction of the method may be generally defined or otherwise characterized as a condensation reaction, and certain parameters and conditions of the reaction may be selected by those of skill in the art in view of the particular components being utilized. For example, in some such embodiments, the method comprises disposing a catalyst (i.e., a condensation catalyst) into the mixture. Condensation catalysts, such as those based on tin (e.g. Sn octanoate) or bases (e.g. NaOAc, KOH, etc.), are known in the art, and will be selected based on the method components being utilized. In other embodiments, however, the method is carried out in the absence of any tin catalyst, e.g. to provide the mixture as a product free from tin, and thereby avoid limitations associated with tin being carried into the final composition.

When implemented in the method, the catalyst may be utilized in any amount, which will be selected by one of skill in the art, e.g. based on the particular catalyst selected, the concentration/amount of active catalytic species thereof, the nature/type of solid silicone resin and/or polyether alcohol compound (C) selected, the reaction parameters employed, the scale of the reaction (e.g. total amounts of the method components utilized, etc.), etc. The molar ratio of the catalyst to the method components may influence the rate and/or amount of condensation to prepare the polysiloxane (B) in the mixture. Thus, the amount of the catalyst as compared to the method components, as well as the molar ratios therebetween, may vary. Typically, these relative amounts and molar ratios are selected to maximize the reaction of the method components while minimizing the loading of the catalyst (e.g. for increased economic efficiency of the reaction, increased ease of purification of the reaction product formed, etc.).

In certain embodiments, the catalyst is utilized in an amount of from 0.000001 to 50 wt.%, based on the total amount of solid silicone resin utilized (i.e., wt./wt.). For example, the catalyst may be used in an amount of from 0.000001 to 25, alternatively from 0.00001 to 10, alternatively from 0.0001 to 5 wt.% based on the total amount of solid silicone resin utilized. In some embodiments, the catalyst is utilized in an amount sufficient to provide a ratio of catalytic tin to hydrolysable groups of the solid silicone resin compound of from 1:10 to 1:1,000,000, alternatively from 1:50 to 1:1,000 alternatively from 1:100 to 1:500. Such ratios may be a weight ratio (i.e., wt./wt.) or, alternatively, a molar ratio between the components. It will be appreciated that amounts and ratios outside of the ranges listed above may be utilized as well. For example, the catalyst may be utilized in a stoichiometric amount (i.e., a supracatalytic amount), e.g. based on the total amount of the polyether alcohol compound (C) utilized in the mixture.

The catalyst may be prepared or otherwise obtained (i.e., as a prepared compound). Methods of preparing condensation catalysts (e.g. tin catalyst, acetate catalyst, etc.) are known in the art, using compounds that are commercially available from various suppliers. The catalyst may thus be prepared prior to the reaction of the solid silicone resin and the polyether alcohol compound (C) (and optionally the aminosilicon compound), or in situ (i.e., during the reaction of those components, e.g. via combining components of the catalyst with the mixture comprising the solid silicone resin, the polyether alcohol compound (C), and optionally the aminosilicon compound). As such, in certain embodiments, the catalyst is prepared as part of the preparation method, i.e., the preparation method includes preparing the catalyst.

When a condensation reaction is desired, the method will typically further comprise exposing the mixture to one or more condensation conditions, such as elevated temperature, reduced pressure, reflux, etc. As such, the vessel or reactor may be heated or cooled in any suitable manner, e.g. via a jacket, mantle, exchanger, bath, coils, etc., so as to allow for the reaction to be carried out at an elevated or reduced temperature, pressure, etc., as described below. For example, based on the nature of the condensation reaction, the condensation conditions may include heating the mixture to an elevated temperature such as 100 °C, e.g. to promote condensation of the polyether alcohol compound (C) and the solid silicone resin (and optionally the aminosilicon compound). Similarly, the condensation conditions may include pulling a vacuum on the reactor being utilized to subject the mixture to reduced pressure (e.g. from 35 to 300 mbar). In combination, the reduced pressure and elevated temperature may be utilized to distill water from the reaction, thereby driving the condensation toward completion by preventing the reverse reaction. One of skill in the art will appreciate that the particular temperature and pressure being utilized will be selected based on the method components and carrier vehicle present in the mixture, e.g. to provide efficient refluxing conditions without over-heating the mixture. For example, in various embodiments, the reaction is carried out at a reaction/condensation temperature of from 23 to 200 °C, such as from greater than ambient temperature (e.g. greater than 25 °C) to 200 °C, alternatively greater than 25 to 180, alternatively greater than 25 to 165, alternatively greater than 25 to 150, alternatively from 30 to 150, alternatively from 50 to 150, alternatively from 70 to 150, alternatively from 60 to 150, alternatively from 85 to 150, alternatively from 100 to 150, alternatively from 110 to 150 °C. In certain embodiments, the reaction temperature is selected and/or controlled based on the boiling point of any one solvent or volatile diluent, such as when utilizing refluxing conditions. Additionally, a cosolvent such as toluene may be utilized to azeotrope water from the mixture.

In general, the reaction speed of the components in the mixture (i.e., the condensation of the polyether alcohol compound (C), the solid silicone resin, and optionally the aminosilicon compound) increases as i) the reaction temperature increases, and ii) water is removed from the reaction system. As such, the necessary reaction time will be selected in view of the particulars of the mixture being reacted. In exemplary embodiments, the reaction time (i.e., condensation/capping time, which may be monitored via visual inspection, spectroscopy (e.g. NMR, FT-IR, etc.), or other methods known in the art) may be on the order of from 1 to several hours, such as from 1 to 10 hours, alternatively from 2 to 10, alternatively from 3 to 10, alternatively from 4 to 10, alternatively from 4 to 8, alternatively from 4 to 6 hours. However, longer and shorter reaction times my both be selected, e.g. in view of the sixe/scale of the reaction, and any particular components utilized in the mixture.

In certain embodiments, the method comprises dissolving the solid silicone resin in the carrier vehicle (i.e., solvent) to give a silicone resin solution, and combining the silicone resin solution, the polyether alcohol compound (C) and optionally the aminosilicon compound to form the mixture. In these embodiments, e.g. when the carrier vehicle is utilized, the method typically further comprises removing the carrier vehicle from the mixture once the polysiloxane (B) is prepared therein. More specifically, in such embodiments, liquefying the mixture comprises solvent exchanging the solid silicone resin from the solvent/ carrier vehicle to the polyether alcohol compound (C) and optionally the aminosilicon compound, thereby preparing the mixture. The solvent exchange is not particularly limited, and may simply involve removing the carrier vehicle from the reactor (e.g. via distillation). For example, in certain embodiments, the method comprises heating the mixture to a temperature of from 60 to 150 °C under reduced pressure (i.e., ~35 mbar) to remove the solvent and give the mixture.

As will be appreciated from the description above and examples herein, the mixture prepared via the method provides a liquefied combination of the polysiloxane (B), the polyether alcohol compound (C), and optionally the aminosilicon compound if utilized and not fully consumed. The polysiloxane (B) may comprise a condensation reaction product of the solid silicone resin and the polyether alcohol compound (C) (and optionally the aminosilicon compound) or, alternatively, may simply be a liquefied form the of the solid silicone resin (e.g. when no capping/condensation of the polyether alcohol compound (C) or optionally the aminosilicon compound is carried out). The mixture is then typically disposed in or combined with the polyol (A) to give the isocyanate-reactive component.

The isocyanate-reactive component may optionally comprise various other components. For example, the isocyanate-reactive component is utilized to form a foam. As understood in the art, the isocyanate-reactive component is typically reacted with an isocyanate component to give the foam (e.g. in a two component (2k) system). Various components, like a catalyst, a blowing agent, a surfactant, a flame retardant, etc. may be included in the isocyanate-reactive component, the isocyanate component, or in a further component altogether (such that a multicomponent composition is utilized to form the foam). Such components are described below with reference to a composition including the isocyanate-reactive component, although it is to be appreciated that any of the components described below in connection with the composition may be included in the isocyanate-reactive component but for any polyisocyanate or isocyanate-functional compounds.

As introduced above, a composition for preparing a foam is also disclosed. The composition is curable and may be referred to as a curable composition or a foam composition. The composition comprises the isocyanate-reactive component disclosed above, (D) a polyisocyanate, (E) a catalyst, and (F) a blowing agent. In certain embodiments, the foam comprises, alternatively is, a polyurethane foam. In other embodiments, the foam comprises, alternatively is, a polyisocyanurate foam. In yet other embodiments, the foam comprises both polyurethane and polyisocyanurate segments or moieties. The composition forms a foam upon at least components (A) and (D) reacting in the presence of components (E) and (F). The composition is typically a multi- (i.e., two or more) part composition, with the polyisocyanate (D) being present in an isocyanate component. The catalyst (E) is typically present in the isocyanate-reactive component, described above, but may alternatively be present in the isocyanate component and/or in a third component separate from the isocyanate-reactive and isocyanate components.

Suitable polyisocyanates for the composition have two or more isocyanate functionalities, and include conventional aliphatic, cycloaliphatic, araliphatic and aromatic isocyanates. The polyisocyanate (D) may be selected from the group of diphenylmethane diisocyanates ("MDI"), polymeric diphenylmethane diisocyanates ("pMDI"), toluene diisocyanates ("TDI"), hexamethylene diisocyanates ("HDI"), dicyclohexylmethane diisocyanates ("HMDI"), isophorone diisocyanates ("IPDI"), cyclohexyl diisocyanates ("CHDI"), naphthalene diisocyanate ("NDI"), phenyl diisocyanate ("PDI"), and combinations thereof. In certain embodiments, the polyisocyanate (D) comprises, consists essentially of, or is a pMDI. In one embodiment, the polyisocyanate (D) is of the formula OCN-R-NCO, wherein R is an alkyl moiety, an aryl moiety, or an arylalkyl moiety. In this embodiment, the polyisocyanate (D) can include any number of carbon atoms, typically from 4 to 20 carbon atoms.

Specific examples of suitable polyisocyanates include: alkylene diisocyanates with 4 to 12 carbons in the alkylene moiety such as 1,12-dodecane diisocyanate, 2-ethyl-1,4-tetramethylene diisocyanate, 2-methyl-1,5-pentamethylene diisocyanate, 1,4-tetramethylene diisocyanate and preferably 1,6-hexamethylene diisocyanate; cycloaliphatic diisocyanates such as 1,3- and 1,4-cyclohexane diisocyanate as well as any mixtures of these isomers, 1-isocyanato-3,3,5-trimethyl-5-isocyanatomethylcyclohexane, 2,4- and 2,6-hexahydrotoluene diisocyanate as well as the corresponding isomeric mixtures, 4,4'- 2,2'-, and 2,4'-dicyclohexylmethane diisocyanate as well as the corresponding isomeric mixtures, and aromatic diisocyanates and polyisocyanates such as 2,4- and 2,6-toluene diisocyanate and the corresponding isomeric mixtures, 4,4'-, 2,4'-, and 2,2'-diphenylmethane diisocyanate and the corresponding isomeric mixtures, mixtures of 4,4'-, 2,4'-, and 2,2-diphenylmethane diisocyanates and polyphenylenepolymethylene polyisocyanates, as well as mixtures of MDI and toluene diisocyanate (TDI).

The polyisocyanate (D) may include modified multivalent isocyanates, i.e., products obtained by the partial chemical reaction of organic diisocyanates and/or polyisocyanates. Examples of suitable modified multivalent isocyanates include diisocyanates and/or polyisocyanates containing ester groups, urea groups, biuret groups, allophanate groups, carbodiimide groups, isocyanurate groups, and/or urethane groups. Specific examples of suitable modified multivalent isocyanates include organic polyisocyanates containing urethane groups and having an NCO content of 15 to 33.6 parts by weight based on the total weight, e.g. with low molecular weight diols, triols, dialkylene glycols, trialkylene glycols, or polyoxyalkylene glycols with a molecular weight of up to 6000; modified 4,4'-diphenylmethane diisocyanate or 2,4- and 2,6-toluene diisocyanate, where examples of di- and polyoxyalkylene glycols that may be used individually or as mixtures include diethylene glycol, dipropylene glycol, polyoxyethylene glycol, polyoxypropylene glycol, polyoxyethylene glycol, polyoxypropylene glycol, and polyoxypropylene polyoxyethylene glycols or -triols. Prepolymers containing NCO groups with an NCO content of from 3.5 to 29 parts by weight based on the total weight of the polyisocyanate (D) and produced from the polyester polyols and/or polyether polyols; 4,4'-diphenylmethane diisocyanate, mixtures of 2,4'- and 4,4'-diphenylmethane diisocyanate, 2,4- and/or 2,6-toluene diisocyanates or polymeric MDI are also suitable. Furthermore, liquid polyisocyanates containing carbodiimide groups having an NCO content of from 15 to 33.6 parts by weight based on the total weight of the (2) isocyanate component, may also be suitable, e.g. based on 4,4'- and 2,4'- and/or 2,2'-diphenylmethane diisocyanate and/or 2,4'- and/or 2,6-toluene diisocyanate. The modified polyisocyanates may optionally be mixed together or mixed with unmodified organic polyisocyanates such as 2,4'- and 4,4'-diphenylmethane diisocyanate, polymeric MDI, 2,4'-and/or 2,6-toluene diisocyanate.

It is to be appreciated that the polyisocyanate (D) may include any combination of two or more polyisocyanates that are different from one another based on functionality, molecular weight, viscosity, or structure. In specific embodiments, the polyisocyanate (D) comprises, consists essentially of, or is, a pMDI.

The polyisocyanate (D) typically has a functionality of from 2.0 to 5.0, alternatively from 2.0 to 4.5, alternatively from 2.0 to 4.0, alternatively from 2.0 to 3.5.

In these or other embodiments, the polyisocyanate (D) has an NCO by weight of from 15 to 60, alternatively from 15 to 55, alternatively from 20 to 48.5, wt.%. Methods of determining content of NCO by weight are known in the art based on functionality and molecular weight of the particularly isocyanate.

As described above, the polyisocyanate (D) is typically present in the composition in an amount to provide an isocyanate index based upon whether a polyurethane and/or a polyisocyanurate foam is desired. As known in the art, when the isocyanate index is less than 130, the composition cures to give a predominately polyurethane foam. In contrast, when the isocyanate index is greater than 130, the composition cures to give a predominately polyisocyanurate foam. For example, when the catalyst (E), as described below, comprises or is a trimerization catalyst, the composition forms cyanurate compounds. In certain embodiments, the polyisocyanate (D) is present in the composition in an amount to provide an isocyanate index of from 100 to less than 130, alternatively from 105 to 125. In other embodiments, the polyisocyanate (D) is present in the composition in an amount to provide an isocyanate index of from 130 to 350, alternatively from 150 to 350, alternatively from 180 to 350. Isocyanate index is the molar ratio of NCO to isocyanate-reactive hydrogen functional groups, times 100. Isocyanate index and methods of its calculation are well known in the art.

The composition additionally comprises a (E) a catalyst.

In one embodiment, the catalyst (E) comprises a tin catalyst. Suitable tin catalysts include tin(II) salts of organic carboxylic acids, e.g. tin(II) acetate, tin(II) octoate, tin(II) ethylhexanoate and tin(II) laurate. In one embodiment, the catalyst (E) comprises dibutyltin dilaurate, which is a dialkyltin(IV) salt of an organic carboxylic acid. Specific examples of suitable organometallic catalyst, e.g. dibutyltin dilaurates, are commercially available from Air Products and Chemicals, Inc. of Allentown, PA, under the trademark DABCO^{®}. The organometallic catalyst can also comprise other dialkyltin(IV) salts of organic carboxylic acids, such as dibutyltin diacetate, dibutyltin maleate and dioctyltin diacetate.

Examples of other suitable catalysts include iron(II) chloride; zinc chloride; lead octoate; tris(dialkylaminoalkyl)-s-hexahydrotriazines including tris(N,N-dimethylaminopropyl)-shexahydrotriazine; tetraalkylammonium hydroxides including tetramethylammonium hydroxide; alkali metal hydroxides including sodium hydroxide and potassium hydroxide; alkali metal alkoxides including sodium methoxide and potassium isopropoxide; and alkali metal salts of long-chain fatty acids having from 10 to 20 carbon atoms and/or lateral OH groups.

Further examples of other suitable catalysts, specifically trimerization catalysts, include N,N,N-dimethylaminopropylhexahydrotriazine, potassium, potassium acetate, N,N,N-trimethyl isopropyl amine/formate, and combinations thereof.

Yet further examples of other suitable catalysts, specifically tertiary amine catalysts, include dimethylaminoethanol, dimethylaminoethoxyethanol, triethylamine, N,N,N',N'-tetramethylethylenediamine, triethylenediamine (also known as 1,4-diazabicyclo[2.2.2]octane), N,N-dimethylaminopropylamine, N,N,N',N',N"-pentamethyldipropylenetriamine, tris(dimethylaminopropyl)amine, N,N-dimethylpiperazine, tetramethylimino-bis(propylamine), dimethylbenzylamine, trimethylamine, triethanolamine, N,N-diethyl ethanolamine, N-methylpyrrolidone, N-methylmorpholine, N-ethylmorpholine, bis(2-dimethylamino-ethyl)ether, N,N-dimethylcyclohexylamine ("DMCHA"), N,N,N',N',N"-pentamethyldiethylenetriamine, 1,2-dimethylimidazole, 3-(dimethylamino) propylimidazole, 2,4,6-tris(dimethylaminomethyl) phenol, and combinations thereof. The catalyst (E) can comprise delayed action tertiary amine based on 1,8-diazabicyclo[5.4.0]undec-7-ene ("DBU"). Alternatively or in addition, the catalyst (E) can comprise N,N,N'-trimethyl-N'-hydroxyethyl-bisaminoethylether and/or ethylenediamine. The tertiary amine catalysts can be further modified for use as delayed action catalysts by addition of approximately the same stoichiometric amount of acidic proton containing acid, such as phenols or formic acid. Such delayed action catalysts are commercially available from Air Products and Evonik.

The catalyst (E) may be utilized neat or disposed in a carrier vehicle. Carrier vehicles are known in the art and further described below as an optional component for the composition. If the carrier vehicle is utilized and solubilizes the catalyst (E), the carrier vehicle may be referred to as a solvent. The carrier vehicle can be isocyanate-reactive, e.g. an alcohol-functional carrier vehicle, such as dipropylene glycol.

The catalyst (E) can be utilized in various amounts. The catalyst (E) may include any combination of different catalysts. As noted above, the catalyst (E) is typically present in the isocyanate-reactive component, described above, but may alternatively be present in the isocyanate component and/or in a third component separate from the isocyanate-reactive and isocyanate components.

The composition includes further comprises (F) a blowing agent. In instances where a blowing agent is already present, e.g. water, or generated during reaction, e.g. carbon dioxide, the blowing agent may be referred to as a supplemental blowing agent, although the supplemental blowing agent may provide a majority or all of the foaming during cure of the composition. The blowing agent (F) can be selected from the group of chemical blowing agents, physical blowing agents, and combinations thereof. Examples of such blowing agents are described below.

The amount of blowing agent utilized can vary depending on the desired outcome. For example, the amount of blowing agent can be varied to tailor final foam density and foam rise profile, as well as cell size in the final foam.

In various embodiments, the blowing agent (F) comprises the chemical blowing agent, and the chemical blowing agent is selected from the group of Si-OH compounds, which may be monomers, oligomers, or polymers. In certain embodiments, the chemical blowing agent is selected from the group consisting of organosilanes and organosiloxanes having at least one silanol (Si-OH) group. Examples of suitable OH-functional compounds include dialkyl siloxanes, such as OH-terminated dimethyl siloxanes. Such siloxanes may have a relatively low viscosity, such as 10 to 5,000, 10 to 2,500, 10 to 1,000, 10 to 500, or 10 to 100, mPa•s at 25 °C.

In specific embodiments, the chemical blowing agent comprises, alternatively is, water. The amount of water present in the total mass of the composition (prior to reaction) is typically from 0.02 to 1.00, alternatively from 0.03 to 0.9, alternatively from 0.05 to 0.8%, alternatively from 0.1 to 0.7, wt.% based on the total weight of the composition.

In various embodiments, the composition includes a physical blowing agent. The physical blowing agent may be used in addition or alternately to the chemical blowing agent.

In various embodiments, the physical blowing agent is one that undergoes a phase change from a liquid to a gaseous state during exposure to atmospheric pressure and a temperature ≥ 10°C, alternatively ≥ 20°C, alternatively ≥ 30°C, alternatively ≥ 40°C, alternatively ≥ 50°C, alternatively ≥ 60°C, alternatively ≥ 70°C, alternatively ≥ 80°C, alternatively ≥ 90°C, alternatively ≥ 100°C. The boiling point temperature generally depends upon the particular type of physical blowing agent.

Useful physical blowing agents include hydrocarbons, such as pentane, hexane, halogenated, more particularly chlorinated and/or fluorinated, hydrocarbons, for example methylene chloride, chloroform, trichloroethane, chlorofluorocarbons, hydrochlorofluorocarbons ("HCFCs"), ethers, ketones and esters, for example methyl formate, ethyl formate, methyl acetate or ethyl acetate, in liquid form or air, and nitrogen or carbon dioxide as gases. In specific embodiments, the physical blowing agent comprises or is n-pentane. In certain embodiments, the physical blowing agent comprises a compound selected from the group consisting of propane, butane, isobutane, isobutene, isopentane, cyclopentane, n-pentane, dimethylether, or mixtures thereof. In many embodiments, the blowing agent comprises a compound that is inert.

In various embodiments, the physical blowing agent comprises a hydrofluorocarbon ("HFC"). "Hydrofluorocarbon" and "HFC" are interchangeable terms and refer to an organic compound containing hydrogen, carbon, and fluorine. The compound is substantially free of halogens other than fluorine.

Examples of suitable HFCs include aliphatic compounds such as 1,1,1,3,3-pentafluoropropane (HFC-245fa), 1,1,1,3,3-pentafluorobutane (HFC-365mfc), 1-fluorobutane, nonafluorocyclopentane, perfluoro-2-methylbutane, 1-fluorohexane, perfluoro-2,3-dimethylbutane, perfluoro-1,2-dimethylcyclobutane, perfluorohexane, perfluoroisohexane, perfluorocyclohexane, perfluoroheptane, perfluoroethylcyclohexane, perfluoro-1,3-dimethyl cyclohexane, and perfluorooctane, 1,1,1,2-tetrafluoroethane (HFC-134a); as well as aromatic compounds such as fluorobenzene, 1,2-difluorobenzene; 1,4-difluorobenzene, 1,3-difluorobenzene; 1,3,5-trifluorobenzene; 1,2,4,5-tetrafluorobenzene, 1,2,3,5-tetrafluorobenzene, 1,2,3,4-tetrafluorobenzene, pentafluorobenzene, hexafluorobenzene, and 1-fluro-3-(trifluoromethyl)benzene. In certain embodiments, HFC-365mfc and HFC-245fa may be preferred due to their increasing availability and ease of use, with HFC-365mfc having a higher boiling point than HFC-245fa which may be useful in certain applications. For example, HFCs having a boiling point higher than 30° C, such as HFC-365mfc, may be desirable because they do not require liquefaction during foam processing.

An additional example of a physical blowing agent a hydrofluoro-olefin (HFO), such as trans-1,3,3,3-tetrafluoroprop-1-ene (HFO-1234ze, available from Honeywell under the Solstice ze tradename), trans-1-chloro-3,3,3-trifluoropropene (HFO-1233zd, available from Arkema under the Forane tradename), 2,3,3,3-Tetrafluoroprop-1-ene (HFO-1234yf, available from Honeywell under the Solstice yf tradename, and Chemours under the Opteon YF tradename), cis-1,1,1,4,4,4-hexafluoro-2-butene (HFO-1336mzz-Z, available from Chemours under the Opteon MZ tradename), and Opteon 1150.

The blowing agent (F) may be present in the isocyanate-reactive component, the isocyanate component, or may be a separate component in the composition.

In certain embodiments, the composition further comprises (G) a surfactant. The surfactant (G) may be present in the isocyanate-reactive component, the isocyanate component, or a component separate from the isocyanate-reactive and isocyanate components. Suitable surfactants (or "foaming aids") include silicone polyethers, ethylene oxide polymers, propylene oxide polymers, copolymers of ethylene oxide and propylene oxide, other non-ionic surfactants, and combinations thereof. When the composition comprises a silicone polyether as a surfactant, the surfactant is distinguished from the polysiloxane (B), which is not a surfactant, as understood in the art. Typically, such silicone polyether surfactants are non-resinous. Further suitable surfactants may comprise a nonionic surfactant, a cationic surfactant, an anionic surfactant, an amphoteric surfactant, or a mixture of such surfactants.

In various embodiments, the composition comprises a fluorocarbon surfactant or fluorinated surfactant. The fluorinated surfactants can be any of those compounds known in the art which contain fluorine atoms on carbon and are also surfactants. These fluorinated surfactants can be organic or silicon containing. For example, fluorinated organic surfactants can be perfluorianted polyethers such as those which have repeating units of the formulae: 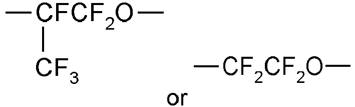 and mixtures of such units.

Silicon-containing fluorinated surfactants can be siloxanes, for example, which contain organic radicals having fluorine bonded thereto, such as siloxanes having repeating units of the formulae:

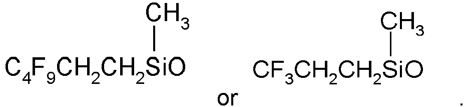

In various embodiments, adding the fluorinated surfactant to the composition decreases the cured foam density. In general, increasing the amount of fluorinated surfactant in the composition decreases the density of the foam. This is especially true for slow cure systems, where the surfactant stabilizes bubbles while the network forms and cures.

The composition may optionally further include an additive component. The additive component may be selected from the group of catalysts, blowing agents, plasticizers, cross-linking agents, chain-extending agents, chain-terminating agents, wetting agents, surface modifiers, waxes, foam stabilizing agents, moisture scavengers, desiccants, viscosity reducers, cell-size reducing compounds, reinforcing agents, dyes, pigments, colorants, fillers, flame retardants, mold release agents, anti-oxidants, compatibility agents, ultraviolet light stabilizers, thixotropic agents, anti-aging agents, lubricants, coupling agents, solvents, rheology promoters, adhesion promoters, thickeners, smoke suppressants, anti-static agents, anti-microbial agents, and combinations thereof.

One or more of the additives can be present as any suitable weight percent (wt.%) of the composition, such as 0.1 wt.% to 15 wt.%, 0.5 wt.% to 5 wt.%, or 0.1 wt.% or less, 1 wt.%, 2, 3, 4, 5, 6, 7, 8, 9, 10, 11, 12, 13, 14, or 15 wt.% or more of the composition. One of skill in the art can readily determine a suitable amount of additive depending, for example, on the type of additive and the desired outcome. Certain optional additives are described in greater detail below.

Suitable carrier vehicles include silicones, both linear and cyclic, organic oils, organic solvents and mixtures of these.

The carrier vehicle may also be a low viscosity organopolysiloxane or a volatile methyl siloxane or a volatile ethyl siloxane or a volatile methyl ethyl siloxane having a viscosity at 25°C in the range of 1 to 1,000 mm²/sec, such as hexamethylcyclotrisiloxane, octamethylcyclotetrasiloxane, decamethylcyclopentasiloxane, dodecamethylcyclohexasiloxane, octamethyltrisiloxane, decamethyltetrasiloxane, dodecamethylpentasiloxane, tetradecamethylhexasiloxane, heptamethyl-3-{(trimethylsilyl)oxy)}trisiloxane, hexamethyl-3,3,bis{(trimethylsilyl)oxy}trisiloxane pentamethyl{(trimethylsilyl)oxy}cyclotrisiloxane as well as polydimethylsiloxanes, polyethylsiloxanes, polymethylethylsiloxanes, polymethylphenylsiloxanes, polydiphenylsiloxanes, caprylyl methicone, and any mixtures thereof.

Suitable pigments are understood in the art. In various embodiments, the composition further comprises carbon black, e.g. acetylene black.

The composition may include one or more fillers. The fillers may be one or more reinforcing fillers, non-reinforcing fillers, or mixtures thereof. Examples of finely divided, reinforcing fillers include high surface area fumed and precipitated silicas including rice hull ash and to a degree calcium carbonate. Fumed silica can include types that are surface-functionalized, such as hydrophilic or hydrophobic, and are available from Cabot Corporation under the CAB-O-SIL tradename. Examples of finely divided non-reinforcing fillers include crushed quartz, diatomaceous earths, barium sulphate, iron oxide, titanium dioxide and carbon black, talc, and wollastonite. Other fillers which might be used alone or in addition to the above include carbon nanotubes, e.g. multiwall carbon nanotubes aluminite, hollow glass spheres, calcium sulphate (anhydrite), gypsum, calcium sulphate, magnesium carbonate, clays such as kaolin, aluminum trihydroxide, magnesium hydroxide (brucite), graphite, copper carbonate, e.g. malachite, nickel carbonate, e.g. zarachite, barium carbonate, e.g. witherite and/or strontium carbonate e.g. strontianite. Further alternative fillers include aluminum oxide, silicates from the group consisting of olivine group; garnet group; aluminosilicates; ring silicates; chain silicates; and sheet silicates. In certain embodiments, the composition includes at least one filler comprising hollow particles, e.g. hollow spheres. Such fillers can be useful for contributing to porosity and/or overall void fraction of the foam. Fillers, when utilized, can be used in the composition in amounts of from 0.01 to 50, alternatively from 0.05 to 40, alternatively from 0.1 to 35, wt.% based on the total weight of the composition. In addition, fumed silica, if utilized, can be used in amounts from 0.01 to 5, alternatively from 0.05 to 3, alternatively from 0.1 to 2.5, alternatively from 0.2 to 2.2 wt.% based on the total weight of the composition.

The filler, if present, may optionally be surface treated with a treating agent. Treating agents and treating methods are understood in the art. The surface treatment of the filler(s) is typically performed, for example with a fatty acid or a fatty acid ester such as a stearate, or with organosilanes, organosiloxanes, or organosilazanes such as hexaalkyl disilazane or short chain siloxane diols. Generally the surface treatment renders the filler(s) hydrophobic and therefore easier to handle and obtain a homogeneous mixture with the other components in the composition. Silanes such as R⁴ₑSi(OR⁵)₄₋ₑ where R⁴ is a substituted or unsubstituted monovalent hydrocarbon group of 6 to 20 carbon atoms, for example, alkyl groups such as hexyl, octyl, dodecyl, tetradecyl, hexadecyl, and octadecyl, and aralkyl groups such as benzyl and phenylethyl, R⁵ is an alkyl group of 1 to 6 carbon atoms, and subscript "e" is equal to 1, 2 or 3, may also be utilized as the treating agent for fillers.

In various embodiments, the composition further comprises an adhesion-imparting agent. The adhesion-imparting agent can improve adhesion of the foam to a base material being contacted during curing. In certain embodiments, the adhesion-imparting agent is selected from organosilicon compounds having at least one alkoxy group bonded to a silicon atom in a molecule. This alkoxy group is exemplified by a methoxy group, an ethoxy group, a propoxy group, a butoxy group, and a methoxyethoxy group. Moreover, non-alkoxy groups bonded to a silicon atom of this organosilicon compound are exemplified by substituted or non-substituted monovalent hydrocarbon groups such as alkyl groups, alkenyl groups, aryl groups, aralkyl groups, halogenated alkyl groups and the like; epoxy group-containing monovalent organic groups such as a 3-glycidoxypropyl group, a 4-glycidoxybutyl group, or similar glycidoxyalkyl groups; a 2-(3,4-epoxycyclohexyl)ethyl group, a 3-(3,4-epoxycyclohexyl)propyl group, or similar epoxycyclohexylalkyl groups; and a 4-oxiranylbutyl group, an 8-oxiranyloctyl group, or similar oxiranylalkyl groups; acrylic group-containing monovalent organic groups such as a 3-methacryloxypropyl group and the like; and a hydrogen atom.

This organosilicon compound generally has a silicon-bonded alkenyl group or silicon-bonded hydrogen atom. Moreover, due to the ability to impart good adhesion with respect to various types of base materials, this organosilicon compound generally has at least one epoxy group-containing monovalent organic group in a molecule. This type of organosilicon compound is exemplified by organosilane compounds, organosiloxane oligomers and alkyl silicates. Molecular structure of the organosiloxane oligomer or alkyl silicate is exemplified by a linear chain structure, partially branched linear chain structure, branched chain structure, ring-shaped structure, and net-shaped structure. A linear chain structure, branched chain structure, and net-shaped structure are typical. This type of organosilicon compound is exemplified by silane compounds such as 3-glycidoxypropyltrimethoxysilane, 2-(3,4-epoxycyclohexyl)-ethyltrimethoxysilane, 3-methacryloxy propyltrimethoxysilane, and the like; siloxane compounds having at least one silicon-bonded alkenyl group or silicon-bonded hydrogen atom, and at least one silicon-bonded alkoxy group in a molecule; mixtures of a silane compound or siloxane compound having at least one silicon-bonded alkoxy group and a siloxane compound having at least one silicon-bonded hydroxyl group and at least one silicon-bonded alkenyl group in the molecule; and methyl polysilicate, ethyl polysilicate, and epoxy group-containing ethyl polysilicate.

In specific embodiments, the composition, and in particular, the isocyanate-reactive component, can further comprise a chain-extending agent. Suitable chain extending agents include any of the components listed above as initiators for the polyol (A), which may be used alone or in combination as the chain-extending agent, when present, separate from and in addition to the polyol (A).

Any of the optional additives, if utilized in the composition, may be present in the isocyanate-reactive component or as a separate component in the composition. Alternatively, optional additives that are not isocyanate-reactive, e.g. fillers, etc., may be included in the isocyanate component. Typically, the composition is a 2k (two-component) composition, where the isocyanate component consists of the polyisocyanate (D) and the isocyanate-reactive component comprises the remaining components.

In certain embodiments, the isocyanate-reactive component has a viscosity at 25 °C of less than 1,500, alternatively less than 1,400, alternatively less than 1,300, alternatively less than 1,200, alternatively less than 1,100, alternatively less than 1,000, alternatively less than 900, alternatively less than 875, alternatively less than 850, centipoise. Dynamic viscosity may be measured via a TA Instruments AR 2000 rheometer with 45 mm cone-plate geometry at a constant shear rate of 10 s⁻¹ with temperature ramp rate of 3 °C/min from 20 to 80 °C. Kinematic viscosity can be measured in accordance with ASTM D445. These ranges apply even when the composition is a 2k composition and the isocyanate-reactive component includes everything in the composition other than the polyisocyanate (D). This viscosity range allows for the isocyanate-reactive component to flow freely, which is advantageous for certain end use applications where foaming is desired in or on certain substrates or articles, including those defining gaps and/or orifices.

The composition may be prepared by combining the isocyanate-reactive component and the isocyanate component, as well as any optional components, if not present in the isocyanate-reactive component, in any order of addition, As described in greater detail below, the composition may be a one part composition, a two component or 2K composition, or a multi-part composition. When the isocyanate-reactive component and the isocyanate component are combined, particularly in the presence of the catalyst (E), a reaction is initiated, which results in a foam. The foam can be formed at room temperature and ambient conditions. Alternatively, at least one condition may be selectively modified during formation of the foam, e.g. temperature, humidity, pressure, etc.

The foam comprising the reaction product of the composition is also disclosed.

In many embodiments, the foam is a closed-cell foam. In other embodiments, the foam is an open-cell foam. In various embodiments, the foam has a density from 20 to 70, alternatively from 30 to 60, alternatively from 30 to 50, alternatively from 30 to 45, kg/m³. Density of the foam can be determined via methods understood in the art. For example, density of the foam can be measured via the Archimedes principle, using a balance and density kit, and following standard instructions associated with such balances and kits. An example of a suitable balance is a Mettler-Toledo XS205DU balance with density kit.

In various embodiments, the foam has pores that are generally uniform in size and/or shape and/or distribution. In certain embodiments, the foam has an average pore size ≤ 5 millimeters, alternatively ≤ 2.5 millimeters, alternatively ≤ 1 millimeter, alternatively ≤ 0.75 millimeters, alternatively from 0.1 to 0.7 millimeters, alternatively from 0.2 to 0.6 millimeters.

Average pore size can be determined via methods understood in the art. For example, ATSM method D3576-15 with the following modifications may be used: (1) image a foam using optical or electron microscopy rather than projecting the image on a screen; and (2) scribe a line of known length that spans greater than 15 cells rather than scribing a 30 mm line.

In various embodiments, the foam has a k-factor of from 15 to 28 mW/m·K. As understood in the art, k-factor can be measured in accordance with ASTM C 518 and as described below in connection with the examples.

The foam, as well as a composite article comprising a substrate and the foam together, can be formed by disposing the composition on a substrate, and curing the composition.

The composition may be disposed or dispensed on the substrate in any suitable manner. Typically, the curable composition is applied in wet form via a wet coating technique. The curable composition may be applied by i) spin coating; ii) brush coating; iii) drop coating; iv) spray coating; v) dip coating; vi) roll coating; vii) flow coating; viii) slot coating; ix) gravure coating; x) Meyer bar coating; or xi) a combination of any two or more of i) to x).

The substrate is not limited and may be any substrate, e.g. a mold, a sheet, a panel, etc. The foam may be separable from the substrate, e.g. if the substrate is a mold, or may be physically and/or chemically bonded to the substrate depending on its selection. The substrate may optionally have a continuous or non-continuous shape, size, dimension, surface roughness, and other characteristics.

Alternatively, the substrate may comprise a plastic, which maybe a thermosetting and/or thermoplastic. However, the substrate may alternatively be or comprise glass, ceramic, metals such as titanium, magnesium, aluminum, carbon steel, stainless steel, nickel coated steel or alloys of such metal or metals, or a combination of different materials. Because the composition can cure at ambient conditions, elevated temperatures are not required to effect curing, which can damage certain substrates.

Specific examples of suitable substrates include polymeric substrates such polyamides (PA); polyesters such as polyethylene terephthalates (PET), polybutylene terephthalates (PET), polytrimethylene terephthalates (PTT), polyethylene naphthalates (PEN), and liquid crystalline polyesters; polyolefins such as polyethylenes (PE), ethylene/acidic monomer copolymers such as is available from Dow under the tradename Surlyn, polypropylenes (PP), and polybutylenes; polystyrene (PS) and other styrenic resins such as SB rubber; polyoxymethylenes (POM); polycarbonates (PC); polymethylenemethacrylates (PMMA); polyvinyl chlorides (PVC); polyphenylene sulfides (PPS); polyphenylene ethers (PPE); polyimides (PI); polyamideimides (PAI); polyetherimides (PEI); polysulfones (PSU); polyethersulfones; polyketones (PK); polyetherketones; polyvinyl alcohols (PVA); polyetheretherketones (PEEK); polyetherketoneketones (PEKK); polyarylates (PAR); polyethernitriles (PEN); phenolic resins; phenoxy resins; celluloses such as triacetylcellulose, diacetylcellulose, and cellophane; fluorinated resins, such as polytetrafluoroethylenes; thermoplastic elastomers, such as polystyrene types, polyolefin types, polyurethane types, polyester types, polyamide types, polybutadiene types, polyisoprene types, and fluoro types; and copolymers, and combinations thereof. Thermosetting resins can include epoxy, polyurethane, polyurea, phenol-formaldehyde, urea-formaldehyde, or combinations thereof. The substrate can include a coating, film, or layer disposed thereon. Coatings made from polymer latex can be used, such as latex from acrylic acid, acrylate, methacrylate, methacrylic acid, other alkylacrylate, other alkylacrylic acid, styrene, isoprene butylene monomers, or latex from the alkyl esters of the acid monomers mentioned in the foregoing, or latex from copolymers of the foregoing monomers. Composites based on any of these resins can be used as substrates by combining with glass fibers, carbon fibers, or solid fillers such as calcium carbonate, clay, aluminum hydroxide, aluminum oxide, silicon dioxide, glass spheres, sawdust, wood fiber, or combination thereof.

In one specific embodiment, the foam can be utilized in insulation applications, e.g. in commercial or residential insulation, insulated metal panels for roofing applications, construction-structural insulated panels (SIP), e.g. for post and beam construction, or tank and/or pipe insulation. Alternatively, in another specific embodiment, the foam can be used in sheathing applications. The end use applications of the foam are not so limited, and the foam can be utilized in lieu of any conventional rigid foam.

The following examples illustrate the invention. Unless otherwise noted, all reactions are carried out under air, and all components are purchased or otherwise obtained from various commercial suppliers.

The following equipment and characterization procedures/parameters are used to evaluate various physical properties of the compounds and compositions prepared in the examples below.

### Equipment and Characterization Parameters

The following equipment and characterization procedures/parameters are used to evaluate various physical properties of the compositions and foams prepared in the examples below.

### Gel Permeation & Size Exclusion Chromatography (GPC/SEC)

### SEC Instrumentation

SEC is performed on a Waters 2695 LC pump and autosampler with a flow rate set at 1 mL/min, and an injection volume set at 100 µL. SEC separation is carried out on 2 Agilent Plgel Mixed-D columns using a Shodex RI-201 differential refractive index detector, each held at 35 °C.

### Sample Preparation

Samples are prepared in THF eluent to a concentration ~ 5 mg/mL polymer. The solution is shaken on a flat-bed shaker at ambient temperature for about 2 hours, and then filtered through a 0.45 um PTFE syringe filter prior to injection.

### Processing of Data

Agilent GPC software Cirrus version 3.3 is used for data collection and for data reduction. A total of 16 polystyrene (PS) linear narrow molecular weight standards from Agilent, having Mp values from 3752 to 0.58 kg/mol, are used for molecular weight calibration. A 3^{rd} order polynomial is used for calibration curve fitting, and all molecular weight averages, distributions, and references to molecular weight are provided as PS equivalent values.

### Brookfield Viscosity Measurement

### Brookfield instrumentation

A Brookfield DV3T cone/plate Rheometer, maintained at 25 °C by water recirculation, is utilized with a CPA-40Z spindle and 0.50 mL material volume for measurement.

### Sample Preparation and Procedure

A method based on ASTM D 4287 is utilized with a leveled viscometer. For each series of samples, required parameters to the digital viscometer are entered and the position of sample cup adjusted in relation to spindle (cone), as specified by the manufacturer, to maintain required clearance. The sample cup is removed, and 0.5 mL of sample added to the center of the cup using a 1 mL syringe in such a manner that all air bubbles are excluded from the material. The sample is allowed to equilibrate at 25 +/- 0.1 °C. The motor is started at the specified speed, and the digital readout of viscosity noted. Prior to samples, the instrument is calibrated using a Standard 200 Fluid (viscosity close to samples, if possible) as a control.

### ²⁹Si NMR

For ²⁹Si NMR, 2.5 to 3 g of each product prepared below and about 5 g of solvent (CDCl₃+Cr(acac)₃) were loaded into a 16 mm silicon free NMR tube and the spectra were obtained as per conditions and instrumentation in Table 2 below:

**Table 2: ²⁹Si NMR Instrumentation**

| Parameter: | ²⁹Si |
|---|---|
| Instrument | Agilent 500 DD2 NMR Spectrometer |
| NMR Probe | 16 mm Si Free AutoX Probe |
| Spectrometer Field Strength | 11.7 T |
| Pulse Sequence | S2PUL |
| Number scans (nt): | 64 |
| Acquisition Time (at): | 1.0161 s |
| Delay Time (d1): | 13 s |
| Pulse Width (pw) | 18 *µs* |
| Solvent | CDCl3 + Cr(acac)3 |
| Decoupler modulation (dm) | nny |
| Decoupler offset frequency (dof) | -400 hz |
| Decoupler modulation field (dmf) | 8812 hz |
| Decoupler sequence (dseq) | Waltz16 |
| Transmitter offset frequency (tof) | -5006 hz |

Foam cell size of the foams formed below was measured in accordance with Modified ASTM D3576, however cell counting was carried out from the images acquired by using a Hitachi SU-8230 Scanning Electron Micrograph in low magnification mode. Cross sections of foam samples were cut with a scalpel and coated with 15 nm Pt/Pd coating.

Foam density of the foams is measured via a modified ASTM D 1622. For this purpose, a 2" x 2" x 2" cube was cut from each foam.

### Test of K-factor

Thermal conductivity of the foams is measured in accordance with ASTM C 518, measuring lambda value (k-factor) at average of 10 °C (2 °C top, 18 °C bottom plate) using a TA LaserComp Fox 200 instrument. 200x200x25mm samples of each foam were cut out with a band saw for this measurement.

### Test of LOI (Limited Oxygen Index)

LOI was tested on FTT Oxygen Index (Model number FTT0077), an equipment from Fire Testing Technology (FTT) for measuring the minimum percentage of oxygen in the test atmosphere which is required to marginally support combustion in accordance with ISO 4589 Part 3 or the UK Naval Engineering Standard NES 715 or GB/T 2406, GB/T 5454. The LOI is a common index for judgement of the flammability of different materials. It is defined as the lowest oxygen concentration (which is tuned by an oxygen-nitrogen mixture) required to sustain combustion of a vertically mounted test piece. The lower LOI indicates worse flame retardancy.

The test piece cut from the same position of mold foams, with size of 150x10x10 mm and marked upside and downside relative to the foaming direction. The sample was put into the test area of the equipment. The nitrogen level was controlled to tune the oxygen level. Generally, 2-3 test pieces were initially burned to roughly estimate the range of LOI (the lower limit and upper limit). Starting from the lower limit of oxygen level, the test pieces were burned, and the burning behavior was monitored, using the standard of burning height of test pieces in the range, lower or higher than 5 cm under fixed oxygen level. The oxygen level was tuned up or down by 0.1-0.2% each time to find the maximum oxygen level which can burn test pieces close to but no more than 5 cm.

### Test of MSD (Maximum Smoke Density)

The test of MSD was conducted on a smoke density test equipment from ShineRay (JCY-2) and tested according to GB/T8627-2007. The test piece cut from the same position of mold foams (size of 25x25x25 mm) and marked upside and downside relative to the foaming direction. The sample was put into the test area of the equipment. The lighter was turned on and flame was tuned to the desired height. After that, the test piece was burned under the flame and the curve of smoke density and time were monitored to get a curve of smoke density versus time, the MSD (maximum smoke density) can be read from the curve. After the test, the chamber was cleaned, and the second test piece was tested following the same procedure. The test was repeated on 3-5 test pieces, and the average of the MSD was used.

### Ignitability of products subjected to direct impingement of flame

A direct flame test according to the Standard EN 11925-2 was conducted on certain foam samples. The test specimens were cut from the same position of mold foams (size of 90x190x25 mm). Specimens were conditioned before the testing for 1 week. The test specimens were put on a specimen holder that is hung in a test cabinet. The burner was positioned vertically to set the flame height to 20 mm and then tilted to a 45° angle. The flame was applied for 15 seconds to the bottom edge of each specimen at the center of its width and thickness and then the burner was pulled back. The height of the flame was recorded. Eventual drops on filter foil were recorded, if present. The test was repeated on 2 test pieces, and the maximum value record during the test of the different specimens for each sample was used.

### Compressive Strength

Two direction compressive strength (CS) at 10% deflection (kPa) was measured according to EN 826. Compressive strength was measured perpendicular and parallel to the foam growth.
The test specimens were cut from the same position of mold foams, and compressive strength was measured in triplicates for each direction. The test specimens for measuring CS were 40x40x25 mm.

### Materials

A brief summary is provided in Table 3 below, setting forth information as to certain abbreviations, shorthand notations, and components utilized in the Examples.

**Table 3: Materials Utilized**

| **Material Ref.** | **Description** |
|---|---|
| MQ Resin 1 | MQ resin, M/Q molar ratio of ~0.72, Mw~ 21,700, OH content of 3.2 wt.%, 71.5% solids in xylene |
| MQ Resin 2 | MQ resin, M/Q molar ratio ~0.94, Mw~ 3450, OH content of 3.5 wt.%, 71.5% solids in xylene |
| MQ Resin 3 | MQ Resin (flake), M/Q molar ratio of ~0.78, Mw of ~ 23500, OH content of 2.9 wt.% |
| MQ Resin 4 | MQ resin: M/Q ratio ~ 0.98; Mw ~ 8550; 71.54% solids in xylene |
| Surfactant 1 | Branched Alkyl (trimethyl Nonanol) Ether, EO~ 3, fn=1 |
| Surfactant 2 | Branched Alkyl (trimethyl Nonanol) Ether, EO~ 10, fn=1 |
| Surfactant 3 | Polypropylene glycol monobutyl ether |
| Surfactant 4 | Branched Alkyl (trimethyl Nonanol) Ether, EO~ 5, fn=1 |
| Surfactant 5 | EO/PO glycol butyl ether, fn=1, Mw~ 406 |
| Surfactant 6 | Block PO-EO, fn=3, Mw 1652 |
| Surfactant 7 | Dipropylene glycol n-butyl ether having a viscosity at 25 °C of 4.9 10⁻³ Pa·s (4.9 cps). |
| Surfactant 8 | EO/PO glycol butyl ether, fn = 1, Mw = 190 |
| Isocyanate 1 | A polymeric MDI having a nominal functionality of 3 and an NCO content by weight of 30.9% (as determined in accordance with ASTM D5155) |
| Isocyanate 2 | A polymeric MDI having a nominal functionality of 2.7 and an NCO content by weight of 31.6% (as determined in accordance with ASTM D5155) |
| Isocyanate 3 | A polymeric MDI having a nominal functionality of 2.7 and an NCO content by weight of 31% (as determined in accordance with ASTM D5155) |
| Isocyanate 4 | A polymeric MDI having a nominal functionality of 2.85, an NCO content by weight of 31% (as determined in accordance with ASTM D5155), and a viscosity at 25 °C of 0.6 Pa·s (600 cps) |
| Polyol 1 | A glycerine initiated all ethylene oxide polyol having a number average molecular weight of approximately 625 and having an average functionality of approximately 3. |
| Polyol 2 | A 4.5 functional, low viscosity, sucrose/glycerine initiated polyether polyol having a hydroxyl (OH) number of 360 mg KOH/g (as measured in accordance with ASTM D4274) |
| Polyol 3 | An aromatic polyester polyol, having a hydroxyl (OH) number of 315 mg KOH/g as measured in accordance with ASTM D4274) and a functionality of 2.4 |
| Polyol 4 | An aromatic polyester polyol, having a hydroxyl (OH) number of 270 mg KOH/g (as measured in accordance with ASTM D4274) and a functionality of 2.7) |
| Polyol 5 | A modified phthalic anhydride-based aromatic polyester polyol having a viscosity at 25 °C of 3 Pa·s (3000 cps) and an OH equivalent weight of 234 g/mol |
| Polyol 6 | A polyester polyol derived from terephtalic acid, diethylene glycol and polyethylene glycol, having a functionality of 2 and a hydroxyl (OH) number of 220 mg KOH/g (as measured in accordance with ASTM D4274) |
| Polyol 7 | A polyester polyol derived from terephthalic acid and >/=50 mol % ortho-phthalic acid having a hydroxyl (OH) number of 315 mgKOH/g (as measured in accordance with ASTM D4274) and a nominal functionality of 2.4 with <20 mol % branched glycol |
| Polyol 8 | A glycerol initiated all propylene oxide polyol having a number average molecular weight of approximately 360 and having an average functionality of approximately 3 |
| Polyol 9 | A modified aromatic polyester polyol, having a hydroxyl (OH) number of 240 mg KOH/g as measured in accordance with ASTM D4274) and a viscosity at 25 °C of 3 Pa·s (3000 cps) |
| Silicone Surfactant 1 | A linear silicone polyether with pendent polyether functionality (EO~12) and a Mw of 9,165 |
| Silicone Surfactant 2 | A polyether-modified polydimethylsiloxane having a viscosity at 25 °C of 0.65 Pa·s (650 cps) |
| Silicone Surfactant 3 | A linear silicone polyether surfactant having pendent polyether functionality (EO~11.2) and a Mw of ~2,350 |
| Silicone Surfactant 4 | A linear silicone polyether surfactant having pendent polyether functionality (EO/PO ~10/4) and a Mw of ~9,968 |
| Silicone Surfactant 5 | A linear silicone polyether surfactant having EO/PO functionality (~ 3.2) and a Mw of 5000 |
| Blowing Agent 1 | Cyclopentane |
| Blowing Agent 2 | Water |
| Blowing Agent 3 | Isopentane |
| Catalyst 1 | N,N,N',N",N"-pentamethyldiethylenetriamine/pentamethyldiethylenetriamine |
| Catalyst 2 | 2,2'-Dimorpholinodiethyl ether |
| Catalyst 3 | Triethylamine |
| Catalyst 4 | N,N-dimethylcyclohexylamine |
| Catalyst 5 | Potassium acetate in diethylene glycol |
| Catalyst 6 | Potassium-octoate in diethylene glycol |
| Flame Retardant 1 | 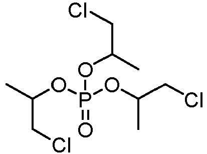 Tris(1-chloro-2-propyl) phosphate |
| Flame Retardant 2 | Triethylphosphate |
| Aminosilicon Compound | 3-aminopropyltriethoxysilane |

### Preparation Example 1

482.59 g of MQ resin 1 and 283.46 g of Surfactant 1 were loaded into a 500 mL pear-shaped flask. The contents of the flask were adjusted to 75 wt.% solids (resin+ surfactant) by addition of xylene. The total weight was 988.3 g. The flask was mixed with an overhead stirrer at 200 rpm and then heated to 90 °C for 20 min. The contents of the flask are then heated at 100 °C for 20 minutes, and the temperature is then increased to 110 °C for about 3 hours. The temperature is increased to 130 °C for about one hour, and the flask was cooled to room temperature and rotovaped under vacuum at 100 °C to remove xylene. The product obtained was clear and had a Brookfield viscosity at 25 °C of 8.4 Pa·s (8400 cps).

### Preparation Example 2

58.6 g of MQ resin 2, 57.4 g Surfactant 2, and 25.6 g Surfactant 3 were loaded into a 500 mL pear-shaped flask. 0.2 grams of Sn octanoate are added to the flask, and the contents of the flask were adjusted to 70 wt.% solids (resin+ surfactant) by addition of xylene. The total weight was 141.9 g. The contents of the flask are then heated to 125 °C and held for five hours. The flask was cooled to room temperature and rotovaped under vacuum at 100 °C to remove xylene. The product obtained was clear and had a Brookfield viscosity at 25 °C of 0.19 Pa·s (185 cps).

### Preparation Examples 3 and 4

The product of Preparation Example 2 is disposed in two different polyols to determine shelf life stability, which was greater than six months. The relevant amounts of the components in Examples 3 and 4 are shown below in Table 4.

**Table 4: Compositions of Examples 3.4:**

| Component | Prep. Ex. 3 | Prep. Ex. 4 |
|---|---|---|
| Product of Preparation Example 2 (g) | 91.2 | 91.2 |
| Polyol 1 (g) | 208.78 | 0 |
| Polyol 2 (g) | 0 | 208.78 |
| % MQ Resin | 10 wt.% | 10 wt.% |
| Equivalent Weight | 220 | 127.2 |
| OH Number | 255.5 | 439.4 |

### Preparation Example 5

273.5 g of MQ Resin 2 and 161.6 g of Surfactant 5 were loaded into a 1000 mL 4-neck flask. 0.15 g of Sn Octanoate was added and the contents of the flask were adjusted to 70 wt.% solids (resin+ surfactant) by addition of xylene. The total weight was 507.5 g. The flask was mixed with an overhead stirrer at 200 rpm and then heated to 80 °C for 15 min. A Dean- Stark trap was attached to the flask and the contents were refluxed at 140 °C for 4 hours, collecting the water of reaction. The flask was cooled to room temperature and rotovaped under vacuum at 100 °C to remove xylene. The product obtained was clear and had a Brookfield viscosity at 25 of 1.6 Pa·s (1595 cps) and a density of 1.084 g/cc. The product was analyzed by GPC. The product obtained had a resin content of ~54%.

### Preparation Example 6

246.7 g of MQ Resin 2 and 79.93 g of Surfactant 1 were loaded into a 1000 mL 4-neck flask. 0.15 g of Sn Octanoate was added and the contents of the flask were adjusted to 50 wt.% solids (resin+ surfactant) by addition of xylene. The total weight was 506.7 g. The flask was mixed with an overhead stirrer at 200 rpm and then heated to 80 °C for 15 min. A Dean- Stark trap was attached to the flask and the contents were refluxed at 140 °C for 4 hours, collecting the water of reaction. The flask was cooled to room temperature and rotovaped under vacuum at 100 °C to remove xylene. The product obtained was clear and had a Brookfield viscosity of 1.8 Pa·s (1800 cps) and a density of 1.088 g/cc. The product was analyzed by GPC and Si NMR. The product obtained had a resin content of ~68%.

### Preparation Example 7

226.0 g of MQ Resin 2 and 93.75 g of Surfactant 4 were loaded into a 1000 mL 4-neck flask. 0.15 g of Sn Octanoate was added and the contents of the flask were adjusted to 50 wt.% solids (resin+ surfactant) by addition of xylene. The total weight was 506.1 g. The flask was mixed with an overhead stirrer at 200 rpm and then heated to 80 °C for 15 min. A Dean- Stark trap was attached to the flask and the contents were refluxed at 140 °C for 4 hours, collecting the water of reaction. The flask was cooled to room temperature and rotovaped under vacuum at 100 °C to remove xylene. The product obtained was clear and had a Brookfield viscosity of 1.39 Pa·s (1386 cps) and a density of 1.27 g/cc. The product was analyzed by GPC. The product obtained had a resin content of ~63%.

### Preparation Example 8

291 g of MQ Resin 2 and 718.2 g of Surfactant 6 were loaded into a 2000 mL 4-neck flask. 0.4 g of Sn Octanoate was added and the contents of the flask were adjusted to 90 wt.% solids (resin+ surfactant) by addition of xylene. The total weight was 1008 g. The flask was mixed with an overhead stirrer at 200 rpm and then heated to 80 °C for 15 min. A Dean-Stark trap was attached to the flask and the contents were refluxed at 140 °C for 4 hours, collecting the water of reaction. The flask was cooled to room temperature and rotovaped under vacuum at 100 °C to remove xylene. The product obtained was clear and had a Brookfield viscosity of 5.88 Pa·s (5884 cps) and a density of 1.046 g/cc. The product was analyzed by GPC -IR. The product obtained had a resin content of ~20%.

### GPC Analysis for Preparation examples 5-8

The results of the GPC analysis for compositions/products obtained in Preparation Examples 5-8 are set forth in Table 5 below.

GPC compositions were obtained by deconvolution of GPC spectra and calibration of free MQ resin and free surfactant.

**Table 5: GPC Data for Initial MQ Resins of Preparation Examples 5-8**

| Prep. Example | MQ Wt. % (est.) | Alcohol Wt. % (est.) | Brookfield Viscosity Pa·s (cps) | Mn | Mw | Mz | Mp | PD |
|---|---|---|---|---|---|---|---|---|
| 1 | 54 | 36 | 1.6 (1595) | 3960 | 5140 | 6910 | 9310 | 1.30 |
| 2 | 68 | 32 | 1.8 (1800) | 2420 | 3370 | 5280 | 9180 | 1.39 |
| 3 | 63 | 37 | 1.39(1386) | 3390 | 4520 | 6120 | 8170 | 1.33 |
| 4 | 20 | 80 | 5884 | 33100 | 65700 | 138000 | 223000 | 1.98 |
| MQ Resin 2 | 100 | 0 | -- | 2270 | 3450 | 6700 | 16300 | 1.52 |

### Examples 1-3 and Comparative Examples 1-2

Compositions and foams were prepared with the products of Preparation Examples 1 and 3-4. The compositions were three part compositions: (1) Part (A) comprises the Isocyanate 1 or 2; and (2) Part (B) comprises the remaining components. Table 6 shows the relative amounts of the components in each of the compositions of Examples 1-3 and Comparative Examples 1-2. The values in Table 6 are grams unless otherwise noted. PE indicates Preparation Example, and thus "PE 1" indicates the relative amount of the product from Preparation Example 1, for example. C.E. indicates Comparative Example. To form the foams, Part B of each composition were mixed in a cup for one minute. Then, Part A was combined with Part B and mixed for five seconds to give a rising foam. Open cell content of the final foam is measured in accordance with ASTM D 2856-94.

**Table 6: Compositions of Examples 1-3 and Comparative Examples 1-2:**

| Component | Ex. 1 | Ex. 2 | Ex. 3 | C.E. 1 | C.E. 2 |
|---|---|---|---|---|---|
| Polyol 3 | 50.19 | 50.19 | 0 | 50.19 | 0 |
| Polyol 4 | 21.51 | 0 | 47.14 | 0 | 47.14 |
| Polyol 1 | 0 | 0 | 0 | 21.51 | 0 |
| Polyol 2 | 0 | 0 | 0 | 0 | 20.09 |
| P.E. 3 | 0 | 21.51 | 0 | 0 | 0 |
| P.E. 4 | 0 | 0 | 20.09 | 0 | 0 |
| P.E. 1 | 7.17 | 0 | 0 | 0 | 0 |
| Blowing Agent 2 | 1.1 | 1.1 | 1.1 | 1.1 | 1.1 |
| Silicone Surfactant 2 | 3 | 3 | 0 | 3 | 0 |
| Silicone Surfactant 1 | 0 | 0 | 3.28 | 0 | 3.28 |
| Catalyst 2 | 0 | 0 | 0.19 | 0 | 0.19 |
| Catalyst 3 | 0 | 0 | 0.19 | 0 | 0.19 |
| Catalyst 1 | 0.25 | 0.25 | 0 | 0.25 | 0 |
| Catalyst 4 | 0.25 | 0.25 | 0 | 0.25 | 0 |
| Catalyst 5 | 0.2 | 0.2 | 0 | 0.2 | 0 |
| Catalyst 6 | 0.49 | 0.49 | 0.43 | 0.49 | 0.43 |
| Flame Retardant 2 | 10.32 | 10.32 | | 10.32 | 0 |
| Flame Retardant 1 | 0 | 0 | 12.17 | 0 | 12.17 |
| Blowing Agent 1 | 13.16 | 13.16 | 14.14 | 13.16 | 14.14 |
| B:lsocyanate 1 (weight ratio) | 0.52 | 0.52 | 0 | 0.52 | 0 |
| B:lsocyanate 2 (weight ratio) | 0 | 0 | 0.67 | 0 | 0.67 |
| Gel time (s) | 48 | 47 | 298 | 49 | 305 |
| Tack free time (s) | 100 | 95 | 721 | 68 | 580 |
| Open Cell Content | 91.7 | 85.5 | 92 | 6.16 | 7.4 |

### Examples 4-9 and Comparative Examples 3-6

Foams were prepared with the products of Preparation Examples 5-8. In particular, each of the foams of Examples 4-9 and Comparative Examples 3-6 were formed from compositions. The compositions were three part compositions: (1) Part (A) was the Isocyanate 3; (2) Part (B) was the Polyol 5, Flame Retardant 1, Silicone Surfactant 3, Blowing Agents, and products of Preparation Examples 5-8, respectively (where applicable); and (3) Part (C) was the Catalysts. Tables 7 and 8 show the relative amounts of the components in each of the compositions of Examples 4-9 and Comparative Examples 3-6. The values in Tables 7 and 8 are grams. PE indicates Preparation Example, and thus "PE 5" indicates the relative amount of the product from Preparation Example 5, for example. C.E. indicates Comparative Example.

**Table 7: Compositions of Examples 4-9:**

| Component | Ex. 4 | Ex. 5 | Ex. 6 | Ex. 7 | Ex. 8 | Ex. 9 |
|---|---|---|---|---|---|---|
| Isocyanate 3 (g) | 220 | 220 | 220 | 220 | 220 | 220 |
| Polyol 5 (g) | 100 | 100 | 100 | 100 | 100 | 100 |
| Flame Retardant 1 (g) | 11 | 11 | 11 | 11 | 11 | 11 |
| Silicone Surfactant 3 (g) | 2.0 | 2.0 | 2.0 | 2.0 | 2.0 | 2.0 |
| Blowing Agent 2 (g) | 1.2 | 1.2 | 1.2 | 1.2 | 1.2 | 1.2 |
| Blowing Agent 1 (g) | 16.5 | 16.5 | 16.5 | 16.5 | 16.5 | 16.5 |
| PE 5 (g) | 1.85 | 0 | 0 | 0 | 0 | 0 |
| PE 6 (g) | 0 | 1.47 | 0 | 0 | 0 | 0 |
| PE 7 (g) | 0 | 0 | 1.59 | 0 | 0 | 0 |
| PE 8 (g) | 0 | 0 | 0 | 5.00 | 5.00 | 10.00 |
| Catalyst 1 (g) | 0.85 | 0.85 | 0.85 | 0.85 | 0.85 | 0.85 |
| Catalyst 6 (g) | 4.50 | 4.50 | 4.50 | 4.50 | 4.50 | 4.50 |

**Table 8: Compositions of Comparative Examples 3-6:**

| Component | C.E. 3 | C.E. 4 | C.E. 5 | C.E. 6 |
|---|---|---|---|---|
| Isocyanate 3 (g) | 220 | 220 | 220 | 220 |
| Polyol 5 (g) | 100 | 100 | 100 | 100 |
| Flame Retardant 1 (g) | 11 | 11 | 11 | 11 |
| Silicone Surfactant 3 (g) | 2.0 | 2.0 | 2.0 | 2.0 |
| Blowing Agent 2 (g) | 1.2 | 1.2 | 1.2 | 1.2 |
| Blowing Agent 1 (g) | 16.5 | 16.5 | 16.5 | 16.5 |
| PE 5 (g) | 0 | 0 | 0 | 0 |
| PE 6 (g) | 0 | 0 | 0 | 0 |
| PE 7 (g) | 0 | 0 | 0 | 0 |
| PE 8 (g) | 0 | 0 | 0 | 0 |
| Surfactant 6 | 0 | 0 | 0 | 8 |
| Catalyst 1 (g) | 0.85 | 0.85 | 0.85 | 0.85 |
| Catalyst 6 (g) | 4.50 | 4.50 | 4.50 | 4.50 |

For each of Examples 4-9 and Comparative Examples 3-6, to prepare each foam, Part (B) was prepared and mixed with Part (A) via a high-speed pneumatic mixer at 2000 revolutions per minute (rpm) for 10 seconds in a plastic container. While still stirring, Part (C) was added to the plastic container via a syringe such that Part (C) was quickly pulled into the vortex. The contents of the plastic container were stirred for an additional 5 seconds (total mixing time of 15 seconds), and the contents of the plastic container were then poured into a plastic film lined wood box with dimensions of 9" x 9" x 4". The resulting foams were removed from the box and allowed to stand for 24 hours before further characterization.

Tables 9 and 10 show the physical properties associated with the foams of Examples 4-9 and Comparative Examples 3-6. C.E. indicates Comparative Example. The indicators b and t in Table 10 relate to measurements taken from samples taken from the top or bottom of the foam, respectively.

**Table 9: Physical Properties:**

| Example: | Weight (grams) | Volume (m³) | Density (kg/m³) | Average cell size, µm |
|---|---|---|---|---|
| C.E. 3 | 1.4461 | 4.45E-05 | 32.5 | 200 |
| C.E. 4 | 1.1909 | 3.76E-05 | 31.7 | 205 |
| Ex. 4 | 1.5944 | 4.89E-05 | 32.6 | 225 |
| Ex. 5 | 1.4469 | 4.3E-05 | 33.7 | 230 |
| Ex. 6 | 1.1723 | 3.5E-05 | 33.5 | 260 |
| Ex. 7 | 1.4585 | 4.27E-05 | 34.2 | 190 |

**Table 10: Physical Properties:**

| Example: | Weight (grams) | Volume (m³) | Density (kg/m³) | k-factor (mW/m· K) |
|---|---|---|---|---|
| C.E. 5-b | 35.553 | 0.001068 | 33.3 | 25.13 |
| C.E. 5-t | 32.909 | 0.001011 | 32.6 | 25.46 |
| C. E. 6-b | 35.628 | 0.001049 | 34.0 | 25.84 |
| C.E. 6-t | 34.457 | 0.001105 | 31.2 | 25.88 |
| Ex. 8-b | 35.154 | 0.000956 | 35.7 | 25.57 |
| Ex. 8-t | 35.834 | 0.00098 | 36.6 | 25.19 |
| Ex. 9-b | 33.979 | 0.000967 | 35.1 | 25.25 |
| Ex. 9-t | 33.953 | 0.000933 | 36.4 | 25.16 |

### Examples 10-12 and Comparative Examples 7-8

Additional foams were prepared. In particular, each of the foams of Examples 10-12 and Comparative Examples 7-8 were formed from compositions. Table 11 shows the relative amounts of the components in each of the compositions of Examples 10-12 and Comparative Examples 7-8. The values in Table 11 are grams.

**Table 11: Compositions of Examples 10-12 and Comparative Examples 7-8:**

| Component | Ex. 10 | Ex. 11 | Ex. 12 | C.E. 7 | C.E. 8 |
|---|---|---|---|---|---|
| Polyol 6 (g) | 61 | 61 | 61 | 61 | 61 |
| Polyol 7 (g) | 20.2 | 20.2 | 20.2 | 20.2 | 20.2 |
| Blowing Agent 2 (g) | 0.8 | 0.8 | 0.8 | 0.8 | 0.8 |
| Flame Retardant 1 (g) | 15 | 15 | 15 | 15 | 15 |
| Silicone Surfactant 4 (g) | 3 | 3 | 3 | 3 | 3 |
| Catalyst 1 (g) | 0.95 | 0.95 | 0.95 | 0.95 | 0.95 |
| Catalyst 5 (g) | 1.8 | 1.8 | 1.8 | 1.8 | 1.8 |
| Blowing Agent 1 (g) | 11.9 | 11.9 | 11.9 | 11.9 | 11.9 |
| Blowing Agent 3 (g) | 5.1 | 5.1 | 5.1 | 5.1 | 5.1 |
| MQ Resin 3 (g) | 4.25 | 7.28 | 11.3 | 0 | 0 |
| Surfactant 7 (g) | 2.83 | 4.86 | 7.55 | 0 | 4.86 |
| Isocyanate 4 (g) | 250 | 250 | 250 | 250 | 250 |

The compositions of Examples 10-12 and Comparative Examples 7-8 were identical with the only exception being the presence (or absence in Comparative Example 7) of MQ Resin 3 and Surfactant 7. Examples 10-12 vary the relative amounts of MQ Resin 3 and Surfactant 7. Each of these compositions was prepared as a two-part composition, with all of the components other than Isocyanate 4 being present in an isocyanate-reactive component, and Isocyanate 4 being alone in an isocyanate component. In Examples 10-12, the MQ Resin 3 was dissolved in Surfactant 7 to give a transparent solution, and the transparent solution was then blended along with the other components in each isocyanate-reactive component. Each isocyanate-reactive component was blended for 1 to 2 minutes at 3,000 rpm.

Foams were formed with the compositions of Examples 10-12 and Comparative Examples 7-8. In particular, each isocyanate-reactive component was disposed in a 500 mL container, followed by addition of the isocyanate component to give a mixture. The mixture was stirred vigorously at 3000 rpm for 5 to 6 seconds and poured into a pre-heated mold (60 °C) having dimensions of 400 x 200 x 100 mm. The mold was immediately closed and sealed for 20 minutes to all foam formation and rise. Each foam was then removed from the mold and evaluated as described above.

To ensure the accuracy and consistency of various tests, each side of each foam was marked and the test pieces were cut the from the same positions of each foam with different sizes for different test purposes.

The properties measured for the foams of Examples 10-12 and Comparative Examples 7-8 are in Table 12 below.

**Table 12: Properties of Examples 10-12 and Comparative Examples 7-8:**

| Example: | K-factor (mW/m·K) | LOI (O₂%) | MSD |
|---|---|---|---|
| 10 | 20.25 | 27.55 | 27.8 |
| 11 | 19.87 | 27.75 | 32.2 |
| 12 | 20.28 | 27.15 | 33.8 |
| C.E. 7 | 21.84 | 27.55 | 41.6 |
| C.E. 8 | 22.03 | Not tested | Not tested |

### Example 13

291.7 g of Silicone Resin 4 and 140 g of Surfactant 8 were loaded into a 2000 mL 4-neck flask. No condensation catalyst was added. The flask was rotovaped under a vacuum of 2-5 mm Hg at 60 °C to remove 81.68 g of xylene. The product obtained was clear and had a Brookfield viscosity of 1.23 Pa·s (1230 cps). The samples were analyzed by GPC and Si NMR. The product obtained had a resin content of ~60%.

### Example 14

100 g of the product formed in Example 13 and 6 g Aminosilicon Compound were cold blended for 3 hours at 60 revolutions per minute (rpm) at room temperature for a loading of 10% Aminosilicon Compound based on the resin content of the product formed in Example 13.

### Example 15

100 g of the product formed in Example 13 and 6 g Aminosilicon Compound were blended for 3 hours at 60 rpm and heated at 80 °C in a rotovap at a vacuum of 300 mm Hg.

### Example 16

100 g of the product formed in Example 13 and 12 g Aminosilicon Compound were blended for 3 hours at 60 rpm and heated at 80 °C in a rotovap at a vacuum of 300 mm Hg.

### Example 17

100 g of the product formed in Example 13 and 12 g Aminosilicon Compound were blended for 3 hours at 60 rpm and heated at 80 °C in a rotovap at a vacuum of 300 mm Hg to give a product. 14.7 g of Polyol 8 were combined with the product to give a clear solution.

### Comparative Example 9

12.9 g of Aminosilicon Compound and 87.1 g Surfactant 8 were cold blended for 3 hours at 60 revolutions per minute (rpm) at room temperature.

### Comparative Example 10

12.9 g of Aminosilicon Compound and 87.1 g Surfactant 8 were blended for 3 hours at 60 rpm and heated at 80 °C in a rotovap at a vacuum of 300 mm Hg.

### Comparative Example 11

16.8 g of Aminosilicon Compound and 83.2 g of Surfactant 8 were blended for 3 hours at 60 rpm and heated at 80 °C in a rotovap at a vacuum of 300 mm Hg.

### Comparative Example 12

12.7 g of Aminosilicon Compound and 63.9 g of Polyol 8 were blended for 3 hours at 60 rpm and heated at 80 °C in a rotovap at a vacuum of 300 mm Hg to give a product. 23.3 g of Polyol 2 were then cold blended with the product.

The results of the GPC analysis for the products compositions obtained in Examples 13-17 and Comparative Examples 9-12 are set forth in Table 13 below.

**Table 13: Mw and PD of Examples 13-17 and Comparative Examples 9-12**

| Example | Mw | PD |
|---|---|---|
| 13 | 8219 | 2.25 |
| 14 | 4865 | 1.799 |
| 15 | 5530 | 1.882 |
| 16 | 4197 | 1.6923 |
| 17 | 2930 | 2.004 |
| C.E. 9 | 195 | 1.0773 |
| C.E. 10 | 190 | 1.0497 |
| C.E. 11 | 185 | 1.0452 |
| C.E. 12 | 632 | 2.0927 |

The products of Examples 13-17 and Comparative Examples 9-12 were analyzed for siloxy unit content via ²⁹Si NMR, the results of which are shown in Table 14 below. In Table 14, Z is H or alkyl; Me is methyl; NeoPentyl is (CH₃)₃CCH₂; X is independently H, a hydrocarbyl group R having from 1 to 30 carbon atoms, or a polyether moiety formed by the Polyether Alcohol 9; and T' indicates an H₂NCH₂CH₂CH₂SiO_{3/2} siloxy unit. The values in Table 14 are mole fractions.

**Table 14: Siloxy unit content of Examples 13-17 and Comparative Examples 9-12**

| Unit | 13 | 14 | 15 | 16 | 17 | C.E. 9 | C.E. 10 | C.E. 11 | C.E. 12 |
|---|---|---|---|---|---|---|---|---|---|
| Me₃SiOZ | 0 | 0.11 | 0 | 0.25 | 0.24 | 0 | 0 | 0 | 0 |
| Me₃SiO_{1/2} | 42.15 | 40.47 | 40.36 | 39.74 | 39.15 | 0 | 0 | 0 | 0 |
| NeoPentylMe₂SiO_{1/2} | 1.51 | 1.88 | 1.75 | 1.62 | 1.72 | 0 | 0 | 0 | 0 |
| R'Si(OZ)₃ | 0 | 0.25 | 0 | 0.75 | 0.44 | 92.77 | 88.47 | 97.13 | 93.05 |
| CH₃(OZ)₂SiO_{1/2} | 0 | 0.82 | 0.59 | 1.46 | 0.9 | 7.23 | 11.53 | 2.87 | 6.95 |
| CH₃(OZ)SiO_{2/2} | 0 | 1.49 | 1.51 | 1.7 | 1.61 | 0 | 0 | 0 | 0 |
| T' | 0 | 1.72 | 2.96 | 3 | 2.76 | 0 | 0 | 0 | 0 |
| (OX)SiO3/2 | 13.41 | 7.56 | 8.05 | 5.84 | 6.23 | 0 | 0 | 0 | 0 |
| SiO_{4/2} | 42.93 | 45.69 | 44.79 | 45.65 | 46.95 | 0 | 0 | 0 | 0 |

Table 15 below shows the products or compositions formed in Examples 13-17 and Comparative Examples 9-12. The values in Table 14 are weight percents based on each of the products or compositions formed in Examples 13-17 and Comparative Examples 9-12.

**Table 15: Products formed in Examples 13-17 and Comparative Examples 9-12**

| Component | 13 | 14 | 15 | 16 | 17 | C.E. 9 | C.E. 10 | C.E. 11 | C.E. 12 |
|---|---|---|---|---|---|---|---|---|---|
| Polysiloxane | 60 | 56.6 | 57.6 | 55.5 | 48.9 | 0 | 0 | 0 | 0 |
| Surfactant 8 | 40 | 37.7 | 38.46 | 37 | 32.6 | 87.1 | 87.1 | 83.15 | 63.92 |
| Aminosilicon Compound | 0 | 5.6 | 3.8 | 7.5 | 6.5 | 12.9 | 12.9 | 16.85 | 12.74 |
| Polyol 8 | 0 | 0 | 0 | 0 | 11.9 | 0 | 0 | 0 | 23.3 |

### Examples 18-22 and Comparative Examples 13-20

Isocyanate-reactive components for preparing foams were prepared with the products of Examples 13-17 and Comparative Examples 9-12. In particular, each of the isocyanate-reactive components of Examples 18-22 and Comparative Examples 13-20 were formed with, where applicable, the products of Examples 13-17 or Comparative Examples 9-12. Tables 16 and 17 show the relative amounts of the components in each of the isocyanate-reactive components of 18-22 and Comparative Examples 13-20, which include all components but for the polyisocyanate utilized in the compositions which cure to give the foams. The values in Tables 16 and 17 are wt.% based on the total weight of each particular isocyanate-reactive component. C.E. indicates Comparative Example. In addition, two different Silicone Surfactants were utilized in of the isocyanate-reactive components of Examples 18-22 and Comparative Examples 13-20. Specifically, two isocyanate-reactive components are formed in each of Examples 18-22 and Comparative Examples 13-20: one with Silicone Surfactant 2, and the other with Silicone Surfactant 5. The concentration is the same for all isocyanate-reactive components of Examples 18-22 and Comparative Examples 13-20. Tables 16 and 17 note that Silicone Surfactant 2 or 5 was utilized, which means that one isocyanate-reactive component was made with Silicone Surfactant 2, and another was made with Silicone Surfactant 5, for each of Examples 18-22 and Comparative Examples 13-20.

**Table 16: Isocyanate-reactive Components of Examples 18-22**

| Component | Ex. 18 | Ex. 19 | Ex. 20 | Ex. 21 | Ex. 22 |
|---|---|---|---|---|---|
| Polyol 9 | 81.2 | 81.2 | 81.2 | 81.2 | 81.2 |
| Fire Retardant 2 | 15 | 15 | 15 | 15 | 15 |
| Blowing Agent 2 | 0.8 | 0.8 | 0.8 | 0.8 | 0.8 |
| Catalyst 1 | 0.95 | 0.95 | 0.95 | 0.95 | 0.95 |
| Catalyst 5 | 1.8 | 1.8 | 1.8 | 1.8 | 1.8 |
| Ex. 13 | 4 | 0 | 0 | 0 | 0 |
| Ex. 14 | 0 | 4.2 | 0 | 0 | 0 |
| Ex. 15 | 0 | 0 | 4.2 | 0 | 0 |
| Ex. 16 | 0 | 0 | 0 | 4.3 | 0 |
| Ex. 17 | 0 | 0 | 0 | 0 | 4.9 |
| Silicone Surfactant 2 or 5 | 3 | 3 | 3 | 3 | 3 |
| Blowing Agent 1 | 11.9 | 11.9 | 11.9 | 11.9 | 11.9 |
| Blowing Agent 3 | 5.1 | 5.1 | 5.1 | 5.1 | 5.1 |

**Table 17: Isocyanate-reactive Components of Comparative Examples 13-20**

| Component | C.E. 13 | C.E. 14 | C.E. 15 | C.E. 16 | C.E. 17 | C.E. 18 | C.E. 19 | C.E. 20 |
|---|---|---|---|---|---|---|---|---|
| Polyol 9 | 81.2 | 81.2 | 81.2 | 81.2 | 81.2 | 81.2 | 81.2 | 81.2 |
| Fire Retardant 2 | 15 | 15 | 15 | 15 | 15 | 15 | 15 | 15 |
| Blowing Agent 2 | 0.8 | 0.8 | 0.8 | 0.8 | 0.8 | 0.8 | 0.8 | 0.8 |
| Catalyst 1 | 0.95 | 0.95 | 0.95 | 0.95 | 0.95 | 0.95 | 0.95 | 0.95 |
| Catalyst 5 | 1.8 | 1.8 | 1.8 | 1.8 | 1.8 | 1.8 | 1.8 | 1.8 |
| Aminosilicon Compound | 0 | 0 | 0 | 0 | 0 | 0.3 | 0.23 | 1 |
| C.E. 9 | 1.84 | 0 | 0 | 0 | 0 | 0 | 0 | 0 |
| C.E. 10 | 0 | 1.2 | 0 | 0 | 0 | 0 | 0 | 0 |
| C.E. 11 | 0 | 0 | 1.9 | 0 | 0 | 0 | 0 | 0 |
| C.E. 12 | 0 | 0 | 0 | 2.5 | 0 | 0 | 0 | 0 |
| Silicone Surfactant 2 or 5 | 3 | 3 | 3 | 3 | 3 | 3 | 3 | 3 |
| Blowing Agent 1 | 11.9 | 11.9 | 11.9 | 11.9 | 11.9 | 11.9 | 11.9 | 11.9 |
| Blowing Agent 3 | 5.1 | 5.1 | 5.1 | 5.1 | 5.1 | 5.1 | 5.1 | 5.1 |

The Isocyanate-reactive Components of Examples 18-22 and Comparative Examples 13-20 were prepared as follows: Polyol 9, Silicone Surfactant 2 and/or 5, Flame Retardant 2, blowing Agent 2, and Catalyst 1 were mixed at 15 rpm with a pneumatic mixer for 60-90 seconds to give a masterbatch. Catalyst 5 was added to the masterbatch the day of preparing foams, along with the product the products of Examples 13-17 or Comparative Examples 9-12, where applicable, and blended at 2700 rpm for 15 seconds. Then, Blowing Agents 1 and 3 were incorporated and mixed at 1500 rpm for 10 seconds to give the isocyanate-reactive components in Tables 16 and 17 above.

The Isocyanate-reactive Components of Examples 18-22 and Comparative Examples 13-20 were then combined with Isocyanate 4 by pouring the Isocyanate 4 into the particular Isocyanate-reactive Component and stirring the composition so formed at 2700 rpm for 6 seconds. After stirring, each composition was poured into a 20x20x20 cm cubic box or a 20x20x8 cm mold heated at 50 °C (which was closed upon disposing the composition therein). Use of the cubic box resulted in formation of free rise foams. Use of the mold resulted in molded panels. The molded panels were demolded after 10 minutes.

The compositions formed with the Isocyanate-reactive Components of Examples 18-22 and Comparative Examples 13-20 and Isocyanate 4 were prepared at two different isocyanate indexes: one at 180 (i.e., a low index), and another at 250 (i.e., a high index). As such, the amount of Isocyanate 4 utilized in preparing the corresponding compositions of Examples 18-22 and Comparative Examples 13-20 is that which gives an isocyanate index of either 180 or 250.

Properties of the foams formed in the mold are measured in accordance with the tests described above. Tables 18 and 19 below show the properties of the foams so formed in Examples 18-22 and Comparative Examples 13-20, based both on the type of Silicone Surfactant utilized and whether the particular foam was formed via the low isocyanate index (180) or high isocyanate index (250). In Tables 18 and 19, CS Adv means compressive strength in the direction of the advancement of the foam, and CS tick means compressive strength in the direction of thickness of the foam. S.S. means "Silicone Surfactant."

**Table 18: Properties of Foams of Examples 18-22**

| Property | Iso Index | S.S. | Ex. 18 | Ex. 19 | Ex. 20 | Ex. 21 | Ex. 22 |
|---|---|---|---|---|---|---|---|
| K-factor @ 10 °C (mW/m*K) | High | 5 | 21.9 | 21.4 | 21.4 | 21.7 | 21.4 |
| K-factor @ 10 °C (mW/m*K) | Low | 5 | 21.8 | 21.2 | 21.9 | 21.4 | 21.3 |
| K-factor @ 10 °C (mW/m*K) | High | 2 | 22.6 | 22.12 | 22.6 | 21.8 | 21.6 |
| K-factor @ 10 °C (mW/m*K) | Low | 2 | 22.85 | 20.63 | 21.37 | 21.82 | 23 |
| Ignitability (cm) | High | 5 | 9 | 6 | 6.75 | 7 | 6.5 |
| Ignitability (cm) | Low | 5 | 11.5 | 9.25 | 7.25 | 9 | 10 |
| Ignitability (cm) | High | 2 | 7 | 6 | 7 | 8.5 | 7 |
| Ignitability (cm) | Low | 2 | 10 | 7.5 | 8 | 9 | 8 |
| CS tick (kPa) | High | 5 | 261.5 | 209.3 | 228.6 | 248.4 | 257.8 |
| CS Adv (kPa) | High | 5 | 177.8 | 141.9 | 168.2 | 229.6 | 262.8 |
| CS tick (kPa) | Low | 5 | 214.0 | 192.0 | 238.3 | 185.0 | 230.7 |
| CS Adv (kPa) | Low | 5 | 193.3 | 193.0 | 159.3 | 196.0 | 207.0 |
| CS tick (kPa) | High | 2 | 279.0 | 215.2 | 238.7 | 237.0 | 226.0 |
| CS Adv (kPa) | High | 2 | 175.0 | 147.3 | 150.0 | 133.0 | 174.0 |
| CS tick (kPa) | Low | 2 | 202.7 | 248.3 | 231.7 | 264.7 | 251.7 |
| CS Adv (kPa) | Low | 2 | 188.7 | 227.7 | 165.3 | 209.3 | 191.7 |

**Table 19: Properties of Foams of Comparative Examples 13-20**

| Prop. | Iso Index | S.S. | C.E. 13 | C.E. 14 | C.E. 15 | C.E. 16 | C.E. 17 | C.E. 18 | C.E. 19 | C.E. 20 |
|---|---|---|---|---|---|---|---|---|---|---|
| K-factor @ 10 °C (mW/ m*K) | High | 5 | 23.3 | 23.0 | 23.2 | 23.4 | 23.7 | 23.7 | 23.3 | -- |
| K-factor @ 10 °C (mW/ m*K) | Low | 5 | 24.3 | 23.3 | 23.4 | 22.7 | 23.9 | 23.8 | 23.7 | -- |
| K-factor @ 10 °C (mW/ m*K) | High | 2 | 22.6 | 22.24 | 23.15 | 22.19 | 23.07 | 23.9 | 22.6 | 22.61 |
| K-factor @ 10 °C (mW/ m*K) | Low | 2 | 23.55 | 24.18 | 24.2 | 23.24 | 24.78 | 23.69 | 23.55 | 23.47 |
| Ignita bility (cm) | High | 5 | 10 | 9.25 | 9 | 10.25 | 11 | 9.25 | 9.75 | -- |
| Ignita bility (cm) | Low | 5 | 12.5 | 12 | 12.5 | 12.5 | 12.5 | 14 | 13 | -- |
| Ignita bility (cm) | High | 2 | 9 | 10 | 9.5 | 11 | 10 | 10 | 9.5 | 7.5 |
| Ignita bility (cm) | Low | 2 | 14 | 12 | 12 | 12 | 12.5 | 13 | 13 | 10.5 |
| CS tick (kPa) | High | 5 | 254.8 | 245.3 | 305.2 | 314.5 | 327.0 | 306.7 | 295.3 | -- |
| CS Adv (kPa) | High | 5 | 163.6 | 189.2 | 225.1 | 152.8 | 246.1 | 224.7 | 202.2 | -- |
| CS tick (kPa) | Low | 5 | 262.7 | 231.3 | 285.7 | 219.0 | 282.7 | 222.3 | 264.7 | -- |
| CS Adv (kPa) | Low | 5 | 215.0 | 192.7 | 232.0 | 206.0 | 238.3 | 236.3 | 249.3 | -- |
| CS tick (kPa) | High | 2 | 193.0 | 249.7 | 255.3 | 257.3 | 287.7 | 286.3 | 216.3 | 257.3 |
| CS Adv (kPa) | High | 2 | 226.3 | 215.7 | 216.3 | 177.7 | 229.3 | 194.7 | 245.0 | 213.0 |
| CS tick (kPa) | Low | 2 | 241.7 | 245.7 | 263.7 | 251.0 | 248.0 | 248.0 | 253.7 | 247.0 |
| CS Adv (kPa) | Low | 2 | 227.7 | 244.3 | 235.3 | 230.7 | 230.7 | 239.0 | 239.0 | 216.7 |

## Claims

1. An isocyanate-reactive composition for preparing a foam, said composition comprising:
(A) a polyol;
(B) a polysiloxane having the following formula:
(R¹₃SiO_{1/2})ₐ(R²₂SiO_{2/2})_{b}(R'R²SiO_{2/2})_{b'}(R²SiO_{3/2})_{c}(R'SiO_{3/2})_{c'}(SiO_{4/2})_{d},
wherein subscripts a, b, b', c, c', and d are each mole fractions such that a+b+b'+c+c'+d=1, with the provisos that 0<a<1, 0≤b<0.2, 0≤b'≤0.1, 0<c<0.2, 0≤c'≤0.1, 0.4<d<0.7, and 0≤b'+c'≤0.1, and the ratio of subscript a to subscript d is from 0.7 to 1.2 (a:d); each R¹ is independently selected from hydrocarbyl groups having from 1 to 30 carbon atoms, -OH, and H; each R² is independently selected from R¹ and -OX, where each X is independently H, a hydrocarbyl group R having from 1 to 30 carbon atoms, or a polyether moiety having the general formula -Y-R³(-[Y]ⱼ-Z)ᵢ, wherein R³ is a substituted or unsubstituted hydrocarbon segment, each Y is an independently selected oxyalkylene segment of general formula (CₙH₂ₙO)ₘ, where subscript m is from 1 to 50 and subscript n is independently selected from 2 to 4 in each moiety indicated by subscript m, each Z is independently H or a resinous silicone moiety, subscript i is from 0 to 8, and subscript j is independently 0 or 1 in each moiety indicated by subscript i; and each R' comprises an independently selected amino group; and
(C) a polyether alcohol compound having the general formula HO-Y-R³(-[Y]ⱼ-H)ᵢ, wherein each Y, R³, subscript i, and subscript j are as defined above.

2. A composition for preparing a foam, said composition comprising:
the isocyanate-reactive composition of claim 1;
(D) a polyisocyanate;
(E) a catalyst; and
(F) a blowing agent;
wherein the composition forms a foam upon at least components (A) and (D) reacting in the presence of components (E) and (F).

3. The composition of claim 2, further comprising (G) a surfactant and optionally an aminosilicon compound.

4. The composition of any one of claims 1-3, wherein: (i) subscript a is from 0.3 to 0.6; (ii) the sum of subscripts b and c is less than 0.2; (iii) the polysiloxane (B) has a weight-average molecular weight (Mw), determined according to the method identified in the specification, of from 2000 to 30,000; or (iv) any combination of (i)-(iii).

5. The composition of any one preceding claim, wherein in the polysiloxane (B): (i) each R² is independently of formula -OX in the T siloxy units indicated by subscript c; (ii) X is the polyether moiety in from 1 to 90 mole % of each R² of formula -OX; (iii) each R¹ is independently selected from alkyl and aryl groups containing 1-30 carbon atoms and H; (iv) each R', if present, is independently of formula -(CH₂)_{g}N(H)_{f}R_{2-f}, where each g is independently from 1 to 30, f is 0, 1, or 2, and R is independently selected and defined above; or (v) any combination of (i)-(iv).

6. The composition of any one preceding claim, wherein: (i) the hydrocarbon segment R³ comprises a branched hydrocarbon group having from 3 to 16 carbon atoms; (ii) subscript i is from 1 to 8; (iii) subscript j is 1 in each moiety indicated by subscript i; (iv) each oxyalkylene segment Y independently has the formula (C₂H₄O)ₓ(C₃H₆O)_{y}(C₄H₈O)_{z}, where subscript x is from 1 to 50, subscript y is from 0 to 50, and subscript z is from 0 to 50, and where units indicated by subscripts x, y and z may be in randomized or block form in the oxyalkylene segment; or (v) any combination of (i)-(iv).

7. The composition of any one preceding claim, wherein the polyether alcohol compound (C) comprises the alkoxylation reaction product of (c-1) an alcohol compound comprising at least one hydroxyl group and (c-2) an alkylene oxide or polyoxyalkylene compound, and wherein the polyether alcohol compound (C) comprises: (i) a polydispersity index (PDI) less than 1.15; (ii) a molecular weight (Mw) of at least 5000; (iii) less than 2 wt.% unreacted alcohol compound (c-1), based on the total weight of the polyether alcohol compound (B); or (iv) any combination of (i)-(iii).

8. The composition of any one preceding claim, comprising: (i) from 10 to 80 wt.% of the polysiloxane (B), based on the total weight of components (B) and (C); (ii) from 10 to 95 wt.% of the polyether alcohol compound (C), based on the total weight of components (B) and (C); (iii) a viscosity , determined according to the method identified in the specification, at 25 °C of from 0.1 to 800 Pa·s (100 to 800,000 cps); or (iv) any combination of (i)-(iii).

9. The composition of any one preceding claim, wherein the composition: (i) is free from tin; (ii) is free from cyclic siloxanes; (iii) comprises less than 1 wt.% of solvent, based on the total weight ,determined according to the method identified in the specification, of the composition; or (iv) any combination of (i)-(iii).

10. The composition of any one preceding claim, wherein: (i) the polyol (A) comprises a polyether polyol; (ii) the polyol (A) comprises a polyester polyol; (iii) the composition has a viscosity ,determined according to the method identified in the specification, at 25 °C of from 0.2 to 5 Pa·s (200 to 5,000 cps); or (iv) any combination of (i) to (iii).

11. The composition of claim 2 or 3, wherein: (i) component (D) comprises polymeric MDI (pMDI); (ii) the composition has a viscosity , determined according to the method identified in the specification, at 25 °C of from 0.2 Pa·s to 5 Pa·s (200 to 5,000 cps) ; or (iii) both (i) and (ii).

12. A foam comprising the reaction product of the composition of any one of claim 2 or 3.

13. The foam of claim 12 having: (i) a density , determined according to the method identified in the specification, of from 30 to 70 kg/m3; (ii) a k-factor , determined according to the method identified in the specification, of from 15 to 28 mW/m·K; or (iii) any combination of (i) to (ii).

14. Use of the foam of claim 12 or 13 in insulation applications, construction-structural insulated panels, and/or sheathing.

15. A method of preparing a foam, said method comprising:
mixing a composition, and
curing the composition to give the foam,
wherein the composition is the composition of claim 2 or 3.

## Patentansprüche

1. Isocyanatreaktive Zusammensetzung zur Herstellung eines Schaumstoffs, wobei die Zusammensetzung umfasst:
(A) ein Polyol;
(B) ein Polysiloxan mit der folgenden Formel:
(R¹₃SiO_{1/2})ₐ(R²₂SiO_{2/2})_{b}(R'R²SiO_{2/2})_{b}·(R²SiO_{3/2})_{c}(R'SiO_{3/2})_{c'}(SiO_{4/2})_{d},
wobei die Indizes a, b, b', c, c' und d jeweils Molenbrüche sind, so dass a+b+b'+c+c'+d=1, mit den Vorbehalten, dass 0<a<1, 0≤b<0,2, 0≤b'≤0,1, 0<c<0,2, 0≤c'≤0,1, 0,4<d<0,7, und 0≤b'+c'≤0,1, und das Verhältnis von Index a zu Index d von 0,7 bis 1,2 (a:d) beträgt; R¹ jeweils unabhängig voneinander ausgewählt ist aus Hydrocarbylgruppen, die 1 bis 30 Kohlenstoffatome aufweisen, -OH und H; R² jeweils unabhängig voneinander ausgewählt ist aus R¹ und -OX, wobei X jeweils unabhängig voneinander H, eine Hydrocarbylgruppe R mit 1 bis 30 Kohlenstoffatomen oder ein Polyetherrest mit der allgemeinen Formel -Y-R³(-[Y]ⱼ-Z)ᵢ ist, wobei R³ ein substituiertes oder nicht substituiertes Kohlenwasserstoffsegment ist, Y jeweils ein unabhängig voneinander ausgewähltes Oxyalkylensegment der allgemeinen Formel (CₙH₂ₙO)ₘ ist, wobei Index m von 1 bis 50 beträgt und Index n in jedem durch Index m angegebenen Rest unabhängig voneinander aus 2 bis 4 ausgewählt ist, Z jeweils unabhängig voneinander H oder ein harzartiger Silikonrest ist, Index i von 0 bis 8 beträgt und Index j in jedem durch Index i angegebenen Rest unabhängig voneinander 0 oder 1 ist; und R' jeweils eine unabhängig ausgewählte Aminogruppe ist; und
(C) eine Polyetheralkoholverbindung mit der allgemeinen Formel HO-Y-R³(-[Y]ⱼ-H)ᵢ ist, wobei Y, R³, Index i und Index j jeweils wie oben definiert sind.

2. Zusammensetzung zum Herstellen eines Schaumstoffs, die Zusammensetzung umfassend:
die isocyanatreaktive Zusammensetzung nach Anspruch 1;
(D) ein Polyisocyanat;
(E) einen Katalysator; und
(F) ein Treibmittel;
wobei die Zusammensetzung einen Schaumstoff bildet, wenn mindestens Komponenten (A) und (D) in Gegenwart von Komponenten (E) und (F) reagieren.

3. Zusammensetzung nach Anspruch 2, ferner umfassend (G) ein Tensid und optional eine Aminosiliziumverbindung.

4. Zusammensetzung nach einem der Ansprüche 1 bis 3, wobei: (i) Index a von 0,3 bis 0,6 beträgt; (ii) die Summe aus Index b und Index c kleiner als 0,2 ist; (iii) das Polysiloxan (B) ein gewichtsmittleres Molekulargewicht (Mw), bestimmt gemäß dem in der Beschreibung angegebenen Verfahren, von 2000 bis 30.000 aufweist; oder (iv) eine beliebige Kombination von (i)-(iii).

5. Zusammensetzung nach einem der vorstehenden Ansprüche, wobei in dem Polysiloxan (B): (i) R² jeweils unabhängig voneinander die Formel -OX in den T-Siloxyeinheiten aufweist, die durch Index c angegeben sind; (ii) X der Polyetherrest in von 1 bis 90 Mol-% von jedem R² der Formel -OX ist; (iii) R¹ jeweils unabhängig voneinander ausgewählt ist aus Alkyl- und Arylgruppen mit 1 bis 30 Kohlenstoffatomen und H; (iv) R', falls vorhanden, jeweils unabhängig voneinander der Formel -(CH₂)_{g}N(H)_{f}R_{2-f} entspricht, wobei g jeweils unabhängig voneinander von 1 bis 30 ist, f 0, 1 oder 2 ist und R unabhängig voneinander ausgewählt und wie oben definiert ist; oder (v) eine beliebige Kombination von (i)-(iv).

6. Zusammensetzung nach einem der vorstehenden Ansprüche, wobei: (i) das Kohlenwasserstoffsegment R³ eine verzweigte Kohlenwasserstoffgruppe mit 3 bis 16 Kohlenstoffatomen umfasst; (iv) Index i von 1 bis 8 ist; (iii) Index j in jedem durch Index i angegebenen Rest 1 beträgt; (iv) jedes Oxyalkylensegment Y unabhängig voneinander die Formel (C₂H₄O)ₓ(C₃H₆O)_{y}(C₄H₈O)_{z} aufweist, wobei Index x von 1 bis 50 ist, Index y von 0 bis 50 ist und Index z von 0 bis 50 ist, und wobei die durch die Indizes x, y und z angegebenen Einheiten in dem Oxyalkylensegment in randomisierter oder Blockform vorliegen können; oder (v) eine beliebige Kombination von (i)-(iv).

7. Zusammensetzung nach einem der vorstehenden Ansprüche, wobei die Polyetheralkoholverbindung (C) das Alkoxylierungsreaktionsprodukt von (c-1) einer Alkoholverbindung, die mindestens eine Hydroxylgruppe umfasst, und (c-2) einer Alkylenoxid- oder einer Polyoxyalkylenverbindung umfasst, und wobei die Polyetheralkoholverbindung (C) umfasst: (i) einen Polydispersitätsindex (PDI) von weniger als 1,15; (ii) ein Molekulargewicht (Mw) von mindestens 5000; (iii) zu weniger als 2 Gew.-% nicht umgesetzte Alkoholverbindung (c-1), bezogen auf das Gesamtgewicht der Polyetheralkoholverbindung (B); oder (iv) eine beliebige Kombination von (i)-(iii).

8. Zusammensetzung nach einem der vorstehenden Ansprüche, umfassend: (i) zu von 10 bis 80 Gew.-% das Polysiloxan (B), bezogen auf das Gesamtgewicht von Komponenten (B) und (C); (ii) zu von 10 bis 95 Gew.-% die Polyetheralkoholverbindung (C), bezogen auf das Gesamtgewicht von Komponenten (B) und (C); (iii) eine Viskosität, bestimmt gemäß dem in der Beschreibung angegebenen Verfahren, bei 25 °C von 0,1 bis 800 Pa · s (100 bis 800.000 cps); oder (iv) eine beliebige Kombination von (i)-(iii).

9. Zusammensetzung nach einem der vorstehenden Ansprüche, wobei die Zusammensetzung: (i) frei von Zinn ist; (ii) frei von zyklischen Siloxanen ist; (iii) zu weniger als 1 Gew.-% Lösungsmittel, bezogen auf das Gesamtgewicht, bestimmt gemäß dem in der Beschreibung angegebenen Verfahren, der Zusammensetzung umfasst; oder (iv) eine beliebige Kombination von (i)-(iii).

10. Zusammensetzung nach einem der vorstehenden Ansprüche, wobei: (i) das Polyol (A) ein Polyetherpolyol umfasst; (ii) das Polyol (A) ein Polyesterpolyol umfasst; (iii) die Zusammensetzung eine Viskosität, bestimmt gemäß dem in der Beschreibung angegebenen Verfahren, bei 25 °C von 0,2 bis 5 Pa · s (200 bis 5.000 cps) aufweist; oder (iv) eine beliebige Kombination von (i) bis (iii).

11. Zusammensetzung nach Anspruch 2 oder 3, wobei: (i) Komponente (D) polymeres MDI (pMDI) umfasst; (ii) die Zusammensetzung eine Viskosität, bestimmt nach dem in der Beschreibung identifizierten Verfahren, bei 25 °C von 0,2 Pa · s bis 5 Pa · s (200 bis 5.000 cps) aufweist; oder (iii) sowohl (i) als auch (ii).

12. Schaumstoff, umfassend das Reaktionsprodukt der Zusammensetzung nach einem der Ansprüche 2 oder 3.

13. Schaumstoff nach Anspruch 12, aufweisend: (i) eine Dichte, bestimmt gemäß dem in der Beschreibung angegebenen Verfahren, von 30 bis 70 kg/m3; (ii) einen k-Faktor, bestimmt gemäß dem in der Beschreibung angegebenen Verfahren, von 15 bis 28 mW/m·K; oder (iii) eine beliebige Kombination von (i) bis (ii).

14. Verwendung des Schaumstoffs nach Anspruch 12 oder 13 in Isolierungsanwendungen, baustrukturell isolierten Paneelen und/oder Ummantelung.

15. Verfahren zum Herstellen eines Schaumstoffs, das Verfahren umfassend:
Mischen einer Zusammensetzung, und
Aushärten der Zusammensetzung zur Bildung des Schaumstoffs,
wobei die Zusammensetzung die Zusammensetzung nach Anspruch 2 oder 3 ist.

## Revendications

1. Composition réactive aux isocyanates permettant de préparer une mousse, ladite composition comprenant :
(A) un polyol ;
(B) un polysiloxane ayant la formule suivante :
(R¹₃SiO_{1/2})ₐ(R²₂SiO_{2/2})_{b}(R'R²SiO_{2/2})_{b}·(R²SiO_{3/2})_{c}(R'SiO_{3/2})_{c'}(SiO_{4/2})_{d},
dans laquelle les indices a, b, b', c, c', et d sont chacun des fractions molaires telles que a + b + b' + c + c' + d = 1, sous réserve que 0 <a <1, 0 ≤ b <0,2, 0 ≤ b' ≤ 0,1, 0 < c < 0,2, 0 ≤ c' ≤ 0,1, 0,4 < d < 0,7, et 0 ≤ b' + c' ≤ 0,1, et que le rapport entre l'indice a et l'indice d aille de 0,7 à 1,2 (a:d) ; chaque R¹ est choisi indépendamment parmi des groupes hydrocarbyle ayant de 1 à 30 atomes de carbone, -OH, et H ; chaque R² est choisi indépendamment parmi R¹ et -OX, où chaque X est indépendamment H, un groupe hydrocarbyle R ayant de 1 à 30 atomes de carbone, ou un groupement polyéther ayant la formule générale - Y-R³(-[Y]ⱼ-Z)ᵢ, dans laquelle R³ est un segment hydrocarboné substitué ou non substitué, chaque Y est un segment oxyalkylène choisi indépendamment de formule générale (CₙH₂ₙO)ₘ, où l'indice m vaut de 1 à 50 et l'indice n est choisi indépendamment de 2 à 4 dans chaque groupement indiqué par l'indice m, chaque Z est indépendamment H ou un groupement silicone résineux, l'indice i va de 0 à 8, et l'indice j vaut indépendamment 0 ou 1 dans chaque groupement indiqué par l'indice i ; et chaque R' est un groupe amino choisi indépendamment ; et
(C) un composé polyéther alcool ayant la formule générale HO-Y-R³(-[Y]ⱼ-H)ᵢ, dans laquelle Y, R³, indice i, et indice j sont chacun tels que définis ci-dessus.

2. Composition permettant de préparer une mousse, ladite composition comprenant :
la composition réactive aux isocyanates selon la revendication 1 ;
(D) un polyisocyanate ;
(E) un catalyseur ; et
(F) un agent d'expansion ;
dans laquelle la composition forme une mousse lorsqu'au moins les composants (A) et (D) réagissent en présence des composants (E) et (F).

3. Composition selon la revendication 2, comprenant en outre (G) un agent tensioactif et facultativement un composé d'aminosilicium.

4. Composition selon l'une quelconque des revendications 1 à 3, dans laquelle : (i) l'indice a va de 0,3 à 0,6 ; (ii) la somme des indices b et c est inférieure à 0,2 ; (iii) le polysiloxane (B) a une masse moléculaire moyenne en poids (Mw), déterminée selon la méthode indiquée dans la spécification, allant de 2 000 à 30 000 ; ou (iv) toute combinaison de (i) à (iii).

5. Composition selon l'une quelconque revendication précédente, dans laquelle, dans le polysiloxane (B) : (i) chaque R² est indépendamment de formule - OX dans les motifs siloxy T indiqués par l'indice c ; (ii) X est le groupement polyéther dans 1 à 90 % en moles de chaque R² de formule -OX ; (iii) chaque R¹ est choisi indépendamment parmi des groupes alkyle et aryle contenant de 1 à 30 atomes de carbone et H ; (iv) chaque R', s'il est présent, est indépendamment de formule -(CH₂)_{g}N(H)_{f}R_{2-f}, où chaque g va indépendamment de 1 à 30, f vaut 0, 1 ou 2, et R est choisi indépendamment et défini ci-dessus ; ou (v) toute combinaison de (i) à (iv).

6. Composition selon l'une quelconque revendication précédente, dans laquelle : (i) le segment hydrocarboné R³ comprend un groupe hydrocarboné ramifié ayant de 3 à 16 atomes de carbone ; (ii) l'indice i va de 1 à 8 ; (iii) l'indice j vaut 1 dans chaque groupement indiqué par l'indice i ; (iv) chaque segment oxyalkylène Y a indépendamment la formule (C₂H₄O)ₓ(C₃H₆O)_{y}(C₄H₈O)_{z}, où l'indice x va de 1 à 50, l'indice y va de 0 à 50, et l'indice z va de 0 à 50, et où les motifs indiqués par les indices x, y et z peuvent être sous forme aléatoire ou séquencée dans le segment oxyalkylène ; ou (v) toute combinaison de (i) à (iv).

7. Composition selon l'une quelconque revendication précédente, dans laquelle le composé polyéther alcool (C) comprend le produit de réaction d'alcoxylation de (c-1) un composé alcool comprenant au moins un groupe hydroxyle et (c-2) un composé oxyde d'alkylène ou polyoxyalkylène, et dans laquelle le composé polyéther alcool (C) comprend : (i) un indice de polydispersité (IPD) inférieur à 1,15 ; (ii) une masse moléculaire (Mw) d'au moins 5 000 ; (iii) moins de 2 % en poids du composé alcool (c-1) n'ayant pas réagi, sur la base du poids total du composé polyéther alcool (B) ; ou (iv) toute combinaison de (i) à (iii).

8. Composition selon l'une quelconque revendication précédente, comprenant : (i) de 10 à 80 % en poids du polysiloxane (B), sur la base du poids total des composants (B) et (C) ; (ii) de 10 à 95 % en poids du composé polyéther alcool (C), sur la base du poids total des composants (B) et (C) ; (iii) une viscosité, déterminée selon la méthode indiquée dans la spécification, à 25 °C allant de 0,1 à 800 Pa·s (100 à 800 000 cps) ; ou (iv) toute combinaison de (i) à (iii).

9. Composition selon l'une quelconque revendication précédente, dans laquelle la composition : (i) est exempte d'étain ; (ii) est exempte de siloxanes cycliques ; (iii) comprend moins de 1 % en poids de solvant, sur la base du poids total, déterminé selon la méthode indiquée dans la spécification, de la composition ; ou (iv) toute combinaison de (i) à (iii).

10. Composition selon l'une quelconque revendication précédente, dans laquelle : (i) le polyol (A) comprend un polyol de polyéther ; (ii) le polyol (A) comprend un polyol de polyester ; (iii) la composition a une viscosité, déterminée selon la méthode indiquée dans la spécification, à 25 °C allant de 0,2 à 5 Pa·s (200 à 5 000 cps) ; ou (iv) toute combinaison de (i) à (iii).

11. Composition selon la revendication 2 ou 3, dans laquelle : (i) le composant (D) comprend du MDI polymère (pMDI) ; (ii) la composition a une viscosité, déterminée selon la méthode identifiée dans la spécification, à 25 °C allant de 0,2 Pa·s à 5 Pa·s (200 à 5 000 cps) ; ou (iii) à la fois (i) et (ii).

12. Mousse comprenant le produit de réaction de la composition selon l'une quelconque des revendications 2 ou 3.

13. Mousse selon la revendication 12 ayant : (i) une masse volumique, déterminée selon la méthode identifiée dans la spécification, allant de 30 à 70 kg/m3 ; (ii) un facteur k, déterminé selon la méthode indiquée dans la spécification, allant de 15 à 28 mW/m·K ; ou (iii) toute combinaison de (i) à (ii).

14. Utilisation de la mousse selon la revendication 12 ou 13 dans des applications d'isolation, des panneaux isolés structurels de construction, et/ou des revêtements.

15. Procédé de préparation d'une mousse, ledit procédé comprenant :
le mélange d'une composition, et
le durcissement de la composition afin d'obtenir la mousse,
dans lequel la composition est la composition selon la revendication 2 ou 3.
